# EUROPEAN PATENT APPLICATION

(11) **EP 3 521 987 A1**
(43) Date of publication of application: **07.08.2019**
(21) Application number: 16918930.5
(22) Date of filing: 21.11.2016
(51) Int. Cl.: G06F 3/048

(54) **METHOD AND DEVICE FOR DISPLAYING PAGE, GRAPHICAL USER INTERFACE, AND MOBILE TERMINAL**

(30) Priority: 14.10.2016 WO PCT/CN2016/102200
(71) Applicant: Huawei Technologies Co., Ltd., Longgang District Shenzhen, Guangdong 518129 (CN)
(72) Inventor: DONG, Feng, Shenzhen Guangdong 518129 (CN); GAO, Zhang, Shenzhen Guangdong 518129 (CN)
(74) Representative: Epping - Hermann - Fischer
(86) International application number: PCT/CN2016/106681
(87) International publication number: WO 2018/068364

(57) **Abstract**

Some embodiments of this application provide a method and an apparatus for displaying a page, a graphical user interface, and a mobile terminal. The method includes: first, detecting an operation action of a user; in response to the operation action being detected, movably displaying a page on the display apparatus in a first direction, where the page includes one or more graphs, and the one or more graphs are displayed in initial forms; and in response to a page boundary being reached when the page is moved in the first direction, and the operation action is still detected, displaying a change form of at least one of the plurality of graphs that is adjacent to the boundary, where the change form of the graph is different from the initial forms. The method is used to eliminate a prior-art disadvantage and problem of inconvenience that occurs when a user uses a mobile terminal for interaction.

## Description

### TECHNICAL FIELD

The present invention relates to the field of electronic technologies, and in particular, to a method and an apparatus for displaying a page, a graphical user interface, and a mobile terminal.

### BACKGROUND

With continuous evolution, a mobile terminal can implement a growing quantity of computer functions. By using the mobile terminal, people can not only communicate with each other, but also implement entertainment activities, life management, a mobile office solution, and the like. As a intelligent device that is fully functional, more portable device, and easy to use, the mobile terminal gradually replaces a desktop computer or a laptop, and becomes a mainstream electronic device daily used by people.

To meet portability of the mobile terminal, a display size of the mobile terminal is usually required to be smaller than that of a desktop computer or a laptop. In addition, a quantity of functions executed by the mobile terminal and content of the functions continuously increase. Therefore, in most cases, the mobile terminal can display only a part of an entire page in a current display interface, and a user usually needs to perform a moving operation to make the mobile terminal to display remaining content in a scrolling manner or a translation manner.

For example, when a user performs an operation of sliding a page on mobile terminal, the user usually keeps sliding the page until a boundary of the page, including a top boundary, a bottom boundary, a left boundary, or a right boundary. However, when the page is slid to the boundary of the page, if no visible feedback prompt is shown on the mobile terminal, the user may have misunderstanding about the operation. For example, the user does not know whether the operation entered by the user takes effect, and therefore the user continuously repeats an invalid operation, thereby affecting operation efficiency, and then affecting use experience.

### SUMMARY

A method and an apparatus for displaying a page on a mobile terminal with a display apparatus that are provided according to some embodiments of this application are used to eliminate a prior-art disadvantage and problem of inconvenience that occurs when a user uses a mobile terminal for interaction.

According to an aspect, a method for displaying a page on a mobile terminal with a display apparatus is provided according to some embodiments of this application. The mobile terminal detects an operation action of a user; movably displays a page on the display apparatus according to the operation action of the user; and when it is detected that a page is moved to reach a page boundary according to the operation action, and the operation action is still detected, the mobile terminal changes a form of the first graph, and displays the changed form of the first graph that is in the page and that is adjacent to the page boundary, where the change form looks different from an initial form of the first graph that is not morphed.

With reference to the foregoing description, in some embodiments, the method includes: first, displaying, by the mobile terminal, the page on the display apparatus; detecting, by the mobile apparatus, the operation action of the user in a process of displaying the page; when the operation action is detected, in response to the operation action, movably displaying the page in a first direction, where the page includes one or more graphs, and the one or more graphs are displayed on the display apparatus in initial forms of the graphs, that is, when the page is moved on the display apparatus and an area of the page is displayed, graphs in the area of the page are displayed, and these graphs are displayed on the display apparatus in initial forms of the graphs; then, detecting, by the mobile apparatus, whether the page boundary is reached when the page is moved, and when it is detected that the page boundary is reached when the page is moved in the first direction, and the operation action is still detected, displaying the change form of the first graph on the display apparatus, where the first graph is a graph that is in the one or more graphs displayed on the display apparatus and that is adjacent to the page boundary, and the change form of the first graph is different from the initial form of the first graph.

It should be noted that, the graphs in the page are characters, item lists, digital images, or icons, and one page may include one or more types of graphs.

It should be noted that, a shape change or a size change of the graphs is a change of shapes and sizes of the graphs, and a case in which a part of area of the graphs is moved out of a display area of the display apparatus and a remaining area is displayed on the display area of the display apparatus does not belong to the change of the shapes or sizes of the graphs.

In some embodiments, change forms of the graphs include forms obtained after any one or any combination of the following changes is performed on the initial forms: a shape change, a size change, a transparency change, or a color change.

In some embodiments, when displaying a form of the first graph on the display apparatus, in response to detecting that the operation action is continuously performed, the mobile terminal displays a change form that is of the first graph and that dynamically changes, and a larger action range of the operation action within a preset range leads to a larger form change from the initial form of the first graph to the change form of the first graph. When it is detected that the action range of the operation action exceeds the preset range, the change form of the first graph no longer dynamically changes, and the mobile terminal displays a static change form of the first graph.

In some embodiments, when displaying a form of the first graph on the display apparatus, in response to detecting that the operation action is continuously performed, the mobile terminal displays a change form that is of the first graph and that dynamically changes, and a larger action range of the operation action leads to a larger form change from the initial form of the first graph to the change form of the first graph.

In some embodiments, after displaying the form of the first graph on the display apparatus, in response to the operation action being no longer detected, the mobile terminal restores the form of the first graph from the change form of the first graph to the initial form of the first graph, and displays the initial form of the first graph.

It should be noted that, the mobile terminal displays, on the display apparatus, a tweened animation of gradually restoring the first graph from the change form of the first graph to the initial form of the first graph, until the initial form of the first graph is displayed, to show a process of restoring the form of the first graph.

In some embodiments, after the mobile terminal movably displays the page on the display apparatus in the first direction, when the operation action is no longer detected, the mobile terminal continues to display the following process on the display apparatus: continuing to move the page in the first direction in a deceleration manner following damping movement. When it is detected that the page is moved in the first direction, and if a moving speed is still not reduced to zero even when the page boundary is reached when the page is moved, the mobile terminal displays the change form of the first graph when the page boundary of the page is reached, where the change form of the first graph is different from the initial form of the first graph.

In some embodiments, with reference to some of the foregoing embodiments, in response to the page boundary being reached when the page is moved in the first direction, and the operation action is still detected, the mobile terminal continues to move the page and displays an area (for example, the area is a blank area or a pure color area) beyond the page boundary. The area is different from the page, and the area and the page can be easily distinguished visually by the user. After the operation input is no longer detected, the page is moved in a second direction opposite to the first direction, until the area is no longer displayed.

In some embodiments, the mobile terminal has a touch display, and the step of detecting an operation action of a user includes: detecting a touch action performed by the user on the touch display.

In some other embodiments, that the mobile terminal detects the operation action of the user may further include at least one of the following: detecting a voice instruction of the user; detecting a gesture action of the user; or detecting a body action of the user.

In some embodiments, if the mobile terminal detects that the page boundary is reached when the page is moved in the first direction, and still detects the operation action, the mobile terminal may further play an alert sound for prompting.

With reference to the foregoing embodiments, the first direction is a horizontal direction, a vertical direction, or an oblique direction on the display apparatus.

According to another aspect, in the method, when the mobile terminal detects that the page boundary is reached when the page is moved, and can still detect the operation action, the mobile terminal displays change forms of at least two graphs that are in the one or more graphs and that are adjacent to the page boundary.

In some possible implementation solutions, degrees of form changes from initial forms of the at least two graphs to the change forms of the at least two graphs that are in the one or more graphs and that are adjacent to the page boundary may be different. For example, different form differences are generated according to different distances from the page boundary. For example, if a distance from the page boundary is shorter, a form difference is greater, that is, if a distance between the first graph and the page boundary is less than a distance between the second graph and the page boundary, a difference between a displayed change form of the second graph and an initial form of the second graph is greater than a difference between the displayed change form of the first graph and the initial form of the first graph.

With reference to the foregoing description, a method for displaying a page on a mobile terminal with a display apparatus is provided according to some embodiments of this application, and the method includes: detecting an operation action of a user; in response to the operation action being detected, movably displaying a page on the display apparatus in a first direction, where the page includes one or more graphs, and the one or more graphs are displayed on the display apparatus in initial forms of the graphs; and in response to a page boundary being reached when the page is moved in the first direction, and the operation action is still detected, displaying a change form of a first graph and a change form of a second graph, where the first graph and the second graph are graphs that are in the one or more graphs displayed on the display apparatus and that are adjacent to the page boundary, the change form of the first graph is different from an initial form of the first graph, and the change form of the second graph is different from an initial form of the second graph.

Certainly, if the page boundary is reached when the page is moved in the first direction, and the operation action is still detected, the mobile terminal may further display, on the display apparatus, form changes of a third graph, a fourth graph, and the like that are in the one or more graphs in the page and that are adjacent to the page boundary.

In some embodiments, a distance between the first graph and the page boundary is less than a distance between the second graph and the page boundary, and the step of displaying a change form of the first graph and a change form of a second graph includes: displaying the change form of the first graph and the change form of the second graph, where a difference between the displayed change form of the second graph and the initial form of the second graph is greater than a difference between the displayed change form of the first graph and the initial form of the first graph.

According to some of the foregoing embodiments, the method performed by the mobile terminal provides more intuitive, concise, and interesting interaction information in a process of interacting with the user, thereby improving use experience of the user.

According to still another aspect, in the method, the mobile terminal displays, according to the operation action, moving of the page that is performed in a damping movement manner by using an inertial principle, so as to be closer to an actual effect. When the operation action is no longer detected, the page continues to be moved in the moving direction of the page in a deceleration manner when the operation action stops, until a speed of the page is reduced to zero. When it is detected that the moving speed is not reduced to zero, and the page boundary is reached when the page is moved in the first direction, the change form of the first graph adjacent to the boundary in the page is displayed.

With reference to the foregoing description, in the method provided according to some embodiments of this application, the mobile terminal detects the operation action of the user; in response to the fact that the operation action is detected, movably displays the page on the display apparatus in the first direction, where the page includes the one or more graphs, and the one or more graphs are displayed on the display apparatus in the initial forms of the graphs; in response to the fact that the operation action is no longer detected, continues to move the page in the first direction in the deceleration manner following damping movement; and in response to the fact that it is detected that the moving speed of the page is not reduced to zero, and the page boundary is reached when the page is moved in the first direction, displays the change form of the first graph, where the first graph is a graph that is in the one or more graphs displayed on the display apparatus and that is adjacent to the page boundary, and the change form of the first graph is different from the initial form of the first graph.

In some embodiments, in response to the fact that it is detected that the page boundary is reached when the page is moved in the first direction, the mobile terminal stops moving the page.

In some other embodiments, in response to the fact that it is detected that the page boundary is reached when the page is moved in the first direction, the mobile terminal continues to move the page in the deceleration manner, and displays an area beyond the page boundary, where the area is different from the page; in response to detecting that the moving speed of the page is reduced to zero, the mobile terminal moves the page in a second direction opposite to the first direction, until the area is no longer displayed; and the mobile terminal displays the initial form of the first graph when the area is no longer displayed.

According to still another aspect, a mobile terminal provided according to some embodiments of this application includes a display apparatus, one or more processors, and a memory, where the memory is configured to store a computer program, and the processor is configured to run the computer program to perform the following procedure: detecting an operation action of a user; in response to the operation action being detected, movably displaying a page on the display apparatus in a first direction, where the page includes one or more graphs, and the one or more graphs are displayed in initial forms; and in response to a page boundary being reached when the page is moved in the first direction, and the operation action is still detected, displaying a change form of at least one of the plurality of graphs that is adjacent to the boundary, where the change form of the graph is different from the initial forms.

In some embodiments, the mobile apparatus further performs the following procedure: in response to detecting that the page boundary is reached when the page is moved in the first direction, continuing to move the page in a deceleration manner, and displaying an area beyond the page boundary, where the area is different from the page; in response to detecting that a moving speed of the page is reduced to zero, moving the page in a second direction opposite to the first direction, until the area is no longer displayed; and displaying the initial form of the first graph when the area is no longer displayed.

According to still another aspect, an apparatus for displaying a page on a mobile terminal with a display apparatus is provided according to some embodiments of this application, and the apparatus includes: a detection module, configured to detect an operation action of a user; a moving display module, configured to: in response to the operation action being detected, movably display a page on the display apparatus in a first direction, where the page includes one or more graphs, and the one or more graphs are displayed on the display apparatus in initial forms of the graphs; and a morphing display module, configured to: in response to a page boundary being reached when the page is moved in the first direction, and the operation action is still detected, display a change form of a first graph, where the first graph is a graph that is in the one or more graphs displayed on the display apparatus and that is adjacent to the page boundary, and the change form of the first graph is different from an initial form of the first graph.

In some embodiments, the morphing display module includes: a first display subunit, configured to: in response to detecting that the operation action is continuously performed, display a change form that is of the first graph and that dynamically changes, where a larger action range of the operation action within a preset range leads to a larger form change from the initial form of the first graph to the change form of the first graph; and in response to detecting that the action range of the operation action exceeds the preset range, display a static change form of the first graph.

In some embodiments, the morphing display module includes: a second display subunit, configured to: in response to detecting that the operation action is continuously performed, display a change form that is of the first graph and that dynamically changes, where a larger action range of the operation action leads to a larger form change from the initial form of the first graph to the change form of the first graph.

In some embodiments, the apparatus further includes: a restoration display module, configured to: after the change form of the first graph is displayed, in response to the operation action being no longer detected, display the initial form of the first graph.

In some embodiments, the restoration display module includes: a restoration display subunit, configured to display a tweened animation of gradually restoring the first graph from the change form of the first graph to the initial form of the first graph, until the initial form of the first graph is displayed.

In some embodiments, the apparatus further includes: an area display module, configured to: in response to the page boundary being reached when the page is moved in the first direction, and the operation action is still detected, continue to move the page, and display an area beyond the page boundary, where the area is different from the page; and in response to the operation input being no longer detected, move the page in a second direction opposite to the first direction, until the area is no longer displayed.

According to still another aspect, an apparatus for displaying a page on a mobile terminal with a display apparatus is provided according to some embodiments of this application, and the apparatus includes: a detection module, configured to detect an operation action of a user; a moving display module, configured to: in response to the operation action being detected, movably display a page on the display apparatus in a first direction, where the page includes one or more graphs, and the one or more graphs are displayed on the display apparatus in initial forms of the graphs; and a morphing display module, configured to: in response to a page boundary being reached when the page is moved in the first direction, and the operation action is still detected, display a change form of a first graph and a change form of a second graph, where the first graph and the second graph are graphs that are in the one or more graphs displayed on the display apparatus and that are adjacent to the page boundary, the change form of the first graph is different from an initial form of the first graph, and the change form of the second graph is different from an initial form of the second graph.

In some embodiments, the morphing display apparatus is configured to display the change form of the first graph and the change form of the second graph, where a difference between the displayed change form of the second graph and the initial form of the second graph is greater than a difference between the displayed change form of the first graph and the initial form of the first graph.

According to still another aspect, an apparatus for displaying a page on a mobile terminal with a display apparatus is provided according to some embodiments of this application, and the apparatus includes: a detection module, configured to detect an operation action of a user; a moving display module, configured to: in response to the operation action being detected, movably display a page on the display apparatus in a first direction, where the page includes one or more graphs, and the one or more graphs are displayed on the display apparatus in initial forms of the graphs; and in response to the operation action being no longer detected, continue to move the page in the first direction in a deceleration manner following damping movement; and a morphing display module, configured to: in response to detecting that a moving speed of the page is not reduced to zero, and a page boundary is reached when the page is moved in the first direction, display a change form of a first graph, where the first graph is a graph that is in the one or more graphs displayed on the display apparatus and that is adjacent to the page boundary, and the change form of the first graph is different from an initial form of the first graph.

In some embodiments, the apparatus further includes: an area display module, configured to: in response to detecting that the page boundary is reached when the page is moved in the first direction, continue to move the page in a deceleration manner, and display an area beyond the page boundary, where the area is different from the page; a resiling display module, configured to: in response to detecting that the moving speed of the page is reduced to zero, move the page in a second direction opposite to the first direction, until the area is no longer displayed; and a restoration display module, configured to display the initial form of the first graph when the area is no longer displayed.

According to still another aspect, a graphical user interface on a mobile terminal with a display apparatus is provided according to some embodiments of this application, and the graphical user interface includes a part of a page displayed on the display apparatus, where the page includes one or more graphs, and in response to a fact that an operation action of a user is detected, the page is moved in a first direction, where the one or more graphs are displayed in initial forms; and in response to a page boundary being reached when the page is moved in the first direction, and the operation action is still detected, a change form of a first graph is displayed, where the first graph is a graph that is in the one or more graphs displayed on the display apparatus and that is adjacent to the page boundary, and the change form of the first graph is different from an initial form of the first graph.

In some embodiments, according to an implementation module in a specific implementation of the present invention, the implementation module includes an input unit and an object control configured to implement animation display on a display apparatus, the object control includes a control interface framework and a page operation prompt animation engine, and the page operation prompt animation engine includes an event processing unit, an animation algorithm unit, an event callback mechanism unit, and a graph rendering unit. The input unit obtains input of an operation action of the user. The event processing unit detects the operation action of the user, and converts the operation action of the user into sliding displacement information. The animation algorithm unit calculates location information of a page according to the sliding displacement information. The event callback mechanism unit determines, according to the location information of the page and the sliding displacement information, whether a page boundary is reached when the page is moved, and determines a morphing algorithm and a rendering algorithm. The animation algorithm unit calculates, according to the morphing algorithm, zoom information of a graph in the page displayed on the display apparatus. The graph rendering unit performs graph effect depiction according to the location information of the page and the zoom information of the graph, that is, the rendering algorithm, generates depicting data, and then adapts the depicting data to the specific display apparatus by invoking the control interface framework, to display the depicting data on the display apparatus.

### BRIEF DESCRIPTION OF DRAWINGS

To describe the technical solutions in the embodiments of the present invention more clearly, the following briefly describes the accompanying drawings required for describing the embodiments. In the accompanying drawings, a same reference sign represents corresponding parts. Apparently, the accompanying drawings in the following description show merely some but not all embodiments of the present invention. Persons of ordinary skill in the art may still derive other drawings from these accompanying drawings without creative efforts.
FIG. 1 is a schematic structural diagram of a mobile terminal according to some embodiments;
FIG. 2 is a schematic diagram of software in a mobile terminal according to some embodiments;
FIG. 3 is a schematic diagram of an appearance of a mobile terminal according to some embodiments;
FIG. 4 (a) to FIG. 4 (o) are schematic example diagrams for displaying a form change on a mobile terminal according to some embodiments;
FIG. 5 (a) to FIG. 5 (e) are schematic example diagrams of movably displaying the page on a display apparatus of a mobile terminal according to some embodiments;
FIG. 6 is a flowchart of a method for translating a page and notifying a user that a boundary of the page is reached according to some embodiments;
FIG. 7 (a) to FIG. 7 (c) are schematic example diagrams of a form change of a scrolling list according to some embodiments;
FIG. 8 (a) to FIG. 8 (c) are schematic example diagrams of a form change of a scrolling list according to some embodiments;
FIG. 9 (a) to FIG. 9 (c) are schematic example diagrams of a form change of a scrolling list according to some embodiments;
FIG. 9 (d) is a schematic example diagram of a form change according to some embodiments of specific scenarios;
FIG. 10 (a) to FIG. 10 (c) are schematic example diagrams of a form change of a scrolling list according to some embodiments;
FIG. 11 (a) to FIG. 11 (f) are schematic example diagrams of a form change that occurs when thumbnails are translated according to some embodiments;
FIG. 12 (a) to FIG. 12 (c) are schematic example diagrams of a form change that occurs when icons are translated according to some embodiments;
FIG. 13 (a) to FIG. 13 (d) are schematic example diagrams of a form change that occurs when thumbnails are translated according to some embodiments;
FIG. 14 (a) to FIG. 14 (c) are schematic example diagrams of a form change that occurs when thumbnails are translated leftwards according to some embodiments of specific scenarios;
FIG. 15 (a) to FIG. 15 (c) are schematic example diagrams of a form change that occurs when thumbnails are translated according to some embodiments;
FIG. 15 (d) to FIG. 15 (f) are schematic example diagrams of a form change that occurs when thumbnails are translated according to some embodiments;
FIG. 16 is a schematic diagram of a module that can be configured to run in a mobile terminal according to some embodiments; and
FIG. 17 is a schematic diagram of an apparatus that can be configured to run in a mobile terminal according to some embodiments.

### DESCRIPTION OF EMBODIMENTS

The following clearly and completely describes the technical solutions in the embodiments with reference to the accompanying drawings in some embodiments. Apparently, the described embodiments are merely some but not all of the embodiments. Some well-known methods, processes, structures, and networks are no longer redundantly described.

The following describes an embodiment of a mobile terminal, an embodiment of a graphical user interface used in the mobile terminal, and an embodiment of a method implemented by the mobile terminal. The mobile terminal may be a mobile phone (also referred to as a smartphone), a tablet computer (Tablet Personal Computer), a personal digital assistant (personal digital assistant, PDA for short), an e-book reader (English: e-book reader), a wearable device (Wearable Device), a virtual reality interactive device (Virtual Reality Interactive Device), or the like. The mobile terminal may establish communication with a network by using 2G (2^{nd} Generation mobile phone communications technology specification), 3G (3^{rd} Generation mobile phone communications technology specification), 4G (4^{th} Generation mobile phone communications technology specification), 5G (5^{th} Generation mobile phone communications technology specification), a WLAN (wireless local area network), or a communication mode that may emerge in the future.

For brevity, this is not further limited in the embodiments of the present invention. For ease of description, a mobile terminal is used as an example for description in the following embodiments.

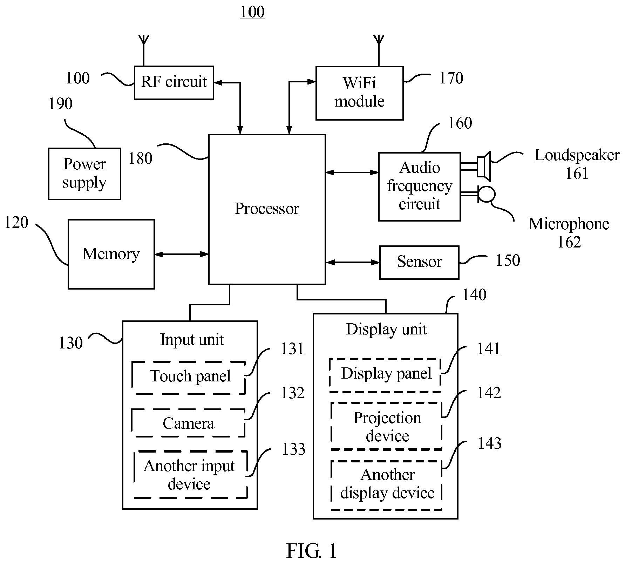

FIG. 1 is a schematic structural diagram of a mobile terminal 100 according to some embodiments. The mobile terminal may be a terminal device including a mobile phone, a tablet computer, a PDA (Personal Digital Assistant, personal digital assistant), a POS (Point of Sale, point of sale), an in-vehicle computer, or the like. The mobile terminal can support various applications such as a telephone application, an instant message transceiving application, a digital photographing and/or image shooting application, a web browsing application, a music and/or video playing application, a video communication application, a social networking application, a financial application, a weather application, a shopping application, and an office application.

FIG. 1 is a block diagram of a partial structure of a mobile terminal 100 according to some embodiments. Referring to FIG. 1, the mobile terminal 100 includes components such as an RF (Radio Frequency, radio frequency) circuit 110, a memory 120, an input unit 130, a display unit 140, a sensor 150, an audio frequency circuit 160, a WiFi (wireless fidelity, Wireless Fidelity) module 170, a processor 180, and a power supply 190.

Persons skilled in the art may understand that the structure of the mobile terminal shown in FIG. 1 is merely an example in an implementation, constitutes no limitation on the mobile terminal, and may include more or fewer components than those shown in the figure, or combine some components, or have different component arrangements.

The following specifically describes each component of the mobile terminal 100 with reference to FIG. 1.

The RF circuit 110 may be configured to: receive and send information, or receive and send a signal in a call process; in particular, after receiving downlink information from a base station, send the downlink information to the processor 180 for processing; and send related uplink data to the base station. The RF circuit usually includes but is not limited to an antenna, at least one amplifier, a transceiver, a coupler, an LNA (Low Noise Amplifier, low noise amplifier), and a duplexer. In addition, the RF circuit 110 may communicate with a network and another device in a wireless communication manner. Any communications standard or protocol may be used for the wireless communication, including but not limited to GSM (Global System of Mobile communication, Global System for Mobile Communications), GPRS (General Packet Radio Service, general packet radio service), CDMA (Code Division Multiple Access, Code Division Multiple Access), WCDMA (Wideband Code Division Multiple Access, Wideband Code Division Multiple Access), LTE (Long Term Evolution, Long Term Evolution), an e-mail, and an SMS (Short Messaging Service, SMS message service).

The memory 120 may be configured to store a software program and a module, and the processor 180 performs various function applications of the mobile terminal 100 and data processing by running the software program and the module stored in the memory 120. The memory 120 may mainly include a program storage area and a data storage area. The program storage area may store an operating system, an application program required by at least one function (such as a sound playing function or an image playing function), and the like. The data storage area may store data (such as audio data or a phone book) created according to use of the mobile terminal 100, and the like. In addition, the memory 120 may include a high-speed random access memory, or may include a nonvolatile memory such as at least one magnetic disk storage device, a flash memory device, or another volatile solid-state storage device.

The input unit 130 may be configured to receive entered digital or character information, and generate key signal or action signal input related to user setting and function control of the mobile terminal 100. Specifically, the input unit 130 may include one or more of a touch panel 131, a camera 132, or another input device 132. The touch panel 131 may be a touch display or a touchpad. The touch display is a device integrating a display and a touch area. The touchpad is a touch-sensitive area of a device that is different from the touch display and that does not display visual output. The touchpad may be a touch-sensitive surface separated from a display panel, or an extension part of a touch-sensitive surface including a touchscreen. The touch panel 131 may collect a touch operation performed by a user on or near the touch panel 131 (such as an operation performed by the user on the touch panel 131 or near the touch panel 131 by using any proper object or accessory, for example, a finger or a stylus), and drive a corresponding connection apparatus according to a preset program. Optionally, the touch panel 131 may include two parts: a touch detection apparatus and a touch controller. The touch detection apparatus detects a touch location of the user, detects a signal brought by the touch operation, and transmits the signal to the touch controller. The touch controller receives touch information from the touch detection apparatus, converts the touch information into touch point coordinates, and sends the touch point coordinates to the processor 180. In addition, the touch controller can receive and execute a command sent by the processor 180. In addition, the touch panel 131 may be implemented in a plurality of types such as a resistive type, a capacitive type, an infrared ray type, and a surface acoustic wave type. The camera 132 may be one or more analog cameras, a digital camera, a depth camera, or a combination of any quantity of the foregoing cameras. The camera 132 may collect a video signal, and transmit the video signal to the processor 180, so that the processor 180 collects an input signal from the video signal (for example, identify a gesture operation of the user from the video signal). In addition to the touch panel 131 and the camera 132, the input unit 130 may include the another input device 133. Specifically, the another input device 133 may include but is not limited to one or more of a physical keyboard, a function key (such as a volume control key or an on/off key), a trackball, a mouse, a joystick, an electroencephalogram identifier, or a gyroscope. In addition, the input unit 130 may cover a microphone 162, the sensor 150, and the like. In some embodiments, the microphone 162 may collect an audio signal, and transmit the audio signal to the processor, so that the processor collects an input signal from the audio signal (for example, identify a voice operation of the user from the audio signal).

The display unit 140 may be configured to display information entered by the user or information provided for the user, and various menus of the mobile terminal 100. The display unit 140 may include one or more of a display panel 141, a projection device 142, or another display device 143. Optionally, the display panel 141 may be configured in a form of an LCD (Liquid Crystal Display, liquid crystal display), an OLED (Organic Light-Emitting Diode, organic light-emitting diode), or the like. Further, the touch panel 131 may cover the display panel 141. When detecting a touch operation on or near the touch panel 131, the touch panel 131 transmits the touch operation to the processor 180 to determine a type of a touch event, and then the processor 180 provides corresponding visual output on the display panel 141 according to the type of the touch event. In FIG. 1, the touch panel 131 and the display panel 141 serve as two independent components to implement input and input functions of the mobile terminal 100. However, in some embodiments, the touch panel 131 and the display panel 141 may be integrated to implement the input and output functions of the mobile terminal 100. The projection device 142 may be a mini projector or a 3D holographic projector. The mini projector may be a device that is installed on an intelligent glasses device and that projects, for imaging, an image on a retina of a human eye by using a translucent prism. Alternatively, the mini projector may be a device that projects an image on a display of the mobile terminal or a screen for imaging. The 3D (three-dimensional) holographic projector is a device that may directly perform projection in physical space by using an interference and diffraction principle, to present a real three-dimensional image of an object. In addition to the display panel 141 and the projection device 142, the display unit 140 may further include the another display device 142. Specifically, the another display device 142 may include but is not limited to a display device (such as a TV) that is connected to the mobile terminal in one or more connection manners such as a wireless local area network, a USB (Universal Serial Bus, Universal Serial Bus) data cable, and an HDMI (High Definition Multimedia Interface, high definition multimedia interface) cable.

The mobile terminal 100 may further include at least one type of sensor 150, for example, a light sensor, a motion sensor, and another sensor. Specifically, the light sensor may include an ambient light sensor and a proximity sensor. The ambient light sensor may adjust luminance of the display panel 141 according to brightness of ambient light. The proximity sensor may turn off the display panel 141 and/or backlight when the mobile terminal 100 moves to an ear. As a motion sensor, an accelerometer sensor may detect a value of acceleration in each direction (generally, three axes), may detect a value and a direction of gravity in a static state, and may be configured to identify an application of a mobile terminal posture (such as switching between a landscape and a portrait, a related game, and magnetometer posture calibration), a function related to vibration identification (such as a pedometer and a strike), and the like. Other sensors such as a gyroscope, a barometer, a hygrometer, a thermometer, and an infrared sensor may be further configured in the mobile terminal 100, and details are not described herein.

The audio frequency circuit 160, a loudspeaker 161, and the microphone 162 may provide an audio interface between the user and the mobile terminal 100. The audio frequency circuit 160 may transmit, to the loudspeaker 161, an electrical signal obtained after received audio data is converted, and the loudspeaker 161 converts the electrical signal into a sound signal for output. In addition, the microphone 162 converts a collected sound signal into an electrical signal. The audio frequency circuit 160 converts the electrical signal into audio data after receiving the electrical signal, and then outputs the audio data to the processor 180 for processing. The processor 180 sends the audio data to, for example, another mobile terminal by using the RF circuit 110, or outputs the audio data to the memory 120 for further processing.

WiFi belongs to a short-distance wireless transmission technology. The mobile terminal 100 may help, by using the WiFi module 170, the user receive and send an email, browse a web page, access streaming media, and the like. The WiFi module 170 provides the user with wireless broadband Internet access. Although FIG. 1 shows the WiFi module 170, it may be understood that the WiFi module 170 is not a mandatory component of the mobile terminal 100, and may be totally omitted according to a requirement without changing the essence of the present invention. The processor 180 is a control center of the mobile terminal 100, is connected to each part of the entire mobile terminal by using various interfaces and cables, and executes various functions of the mobile terminal 100 and processes data by running or executing the software program and/or the module stored in the memory 120 and invoking data stored in the memory 120, so as to perform overall monitoring on the mobile terminal. Optionally, the processor 180 may include one or more processing units. Preferably, the processor 180 may integrate an application processor and a modem processor. The application processor mainly processes an operating system, a user interface, an application program, and the like, and the modem processor mainly processes wireless communication. It may be understood that the foregoing modem processor may be not integrated into the processor 180.

The mobile terminal 100 further includes the power supply 190 (for example, a battery) that supplies power to each component. Preferably, the power supply may be logically connected to the processor 180 by using a power management system, so as to implement functions such as charging management, discharging management, and power consumption management by using the power management system.

Although not shown in the figure, the mobile terminal 100 may further include a camera, a Bluetooth module, and the like, and details are not described herein.

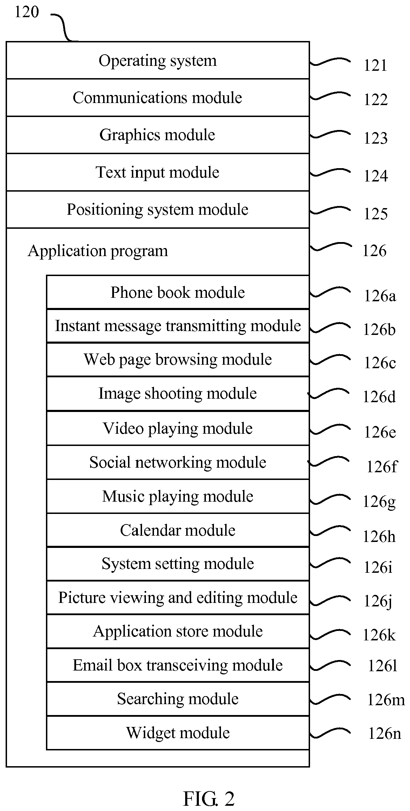

FIG. 2 is a schematic diagram of software components of the mobile terminal according to some embodiments. The mobile terminal 100 further has the software components. The software components may be stored in the memory 120, and may include an operating system 121, a communications module 122, a graphics module 123, a text input module 124, a positioning system module 125 (such as a Global Positioning System (GPS)), an application program 126, and the like.

The operating system 121, for example, an Android (Android) system, an iOS (IOS) system, a UNIX system, or a Windows Phone system, includes various software components and/or drivers configured to control and manage common system tasks (such as power management), and facilitates communication between various hardware and software components.

The communications module 122 includes various software components configured to manage data received by using the RF circuit 100 and/or the WiFi module 170.

The graphics module 123 includes various known software components configured to display various graphs on the display unit 140. The graphs include any object that may be displayed to a user, including but not limited to a text, an item list, an icon (such as a soft key icon or an application icon displayed on a touch display), a digital image, a video, and an animation.

The text input module 124 may provide a soft keyboard by using the graphics module, so as to enter, into various application programs, a text corresponding to a user operation.

The positioning system module 125 is configured to: determine a location of the mobile terminal, and provide each application program with location information for use, for example, provide a map application with the location information.

The application program 126 may include but is not limited to at least one of a phone book module 126a, an instant message transmitting module 126b, a web page browsing module 126c, an image shooting module 126d, a video playing module 126e, a social networking module 126f, a music playing module 126g, a calendar module 126h, a system setting module 126i, a picture viewing and editing module 126j, an application store module 126k, an email transceiving module 1261, a searching module 126m, or a widget module 126n. The widget module 126k may include a calculator widget, a weather widget, a notification widget, a calendar widget, and the like.

With reference to the processor 180, the input unit 130, the display unit 140, and a related application program, after receiving an input signal entered by the user into the input unit 130, the mobile terminal performs corresponding calculation and processing, generates a corresponding output signal, and transmits the output signal to the display unit 140, so that the mobile terminal can interact with the user in a visual and operable manner. In some preferred embodiments, the input unit 130 and the display unit 140 are implemented by using a touch display.

In addition, the mobile terminal may further include one or more keys. The keys may be physical keys, or may be soft keys displayed by using the display unit. In some embodiments, the physical keys may be pressed by using actual pressure, to obtain input. The physical keys may include a button for turning on/off a power supply of a device and locking the device, and a button for adjusting volume. The soft keys may be touched in the manner described above, to obtain input. In an alternative embodiment, the mobile terminal 100 may further receive, by using the microphone 162, voice input used to activate some functions, or receive, by using the sensor 150, action input used to activate some functions, for example, obtain a shake action by using a gravity sensor.

In some of the following embodiments, a mobile terminal that has a touch display as a display apparatus is used as an example to continue to provide a detailed description. Persons skilled in the art can understand that another display apparatus such as a mini projector or a 3D holographic projector is still applicable and may be still an alternative solution of the following embodiment.

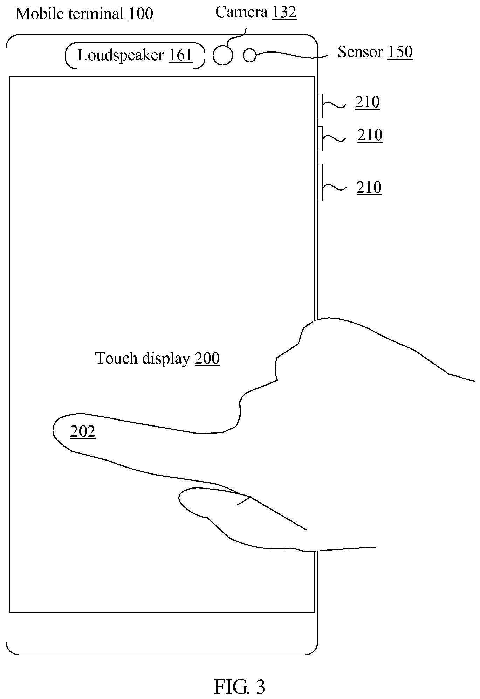

FIG. 3 is a schematic diagram of a mobile terminal with a touch display according to some embodiments. In addition to a loudspeaker 161, a camera 132, a sensor 150, and some physical keys 210 (such as a volume control key and a screen locking/unlocking key), the mobile terminal 100 has a touch display 200. A user may enter a control instruction by performing various touch operations on the touch display 200. The touch operations include: touching a corresponding area by using one or more fingers 202 or a stylus, to control a pointed object. The touching may include one time of tapping, a plurality of times of continuous tapping, or lasting on the touch display 200 and sliding (from left to right, from right to left, upwards/downwards, drawing a circle, or the like). For example, when a finger of the user stays on the touch display 200 and slides, the mobile terminal 100 presents, on the touch display 200, a process of translating a current page in a sliding direction. The touch display 200 is configured to display a user interface used to interact with the user, can present the user interface in an intuitive manner, and can present interaction with the user in a manner that is easy to operate.

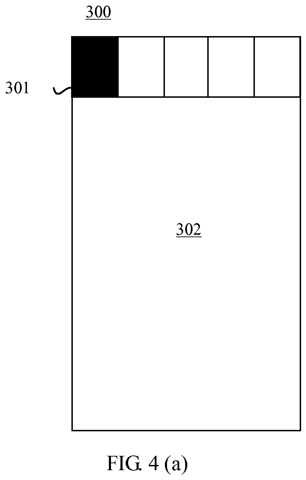

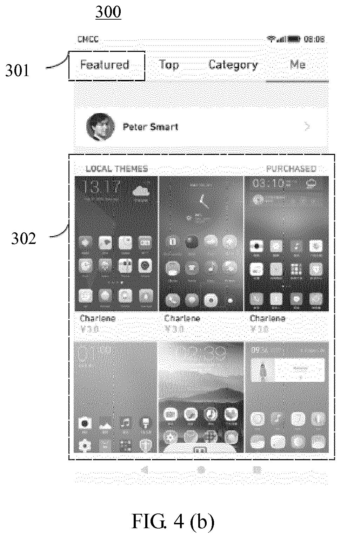

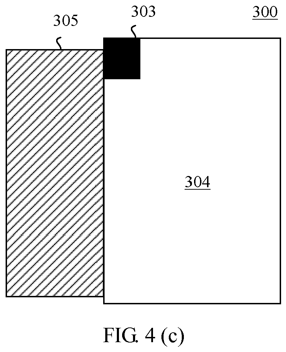

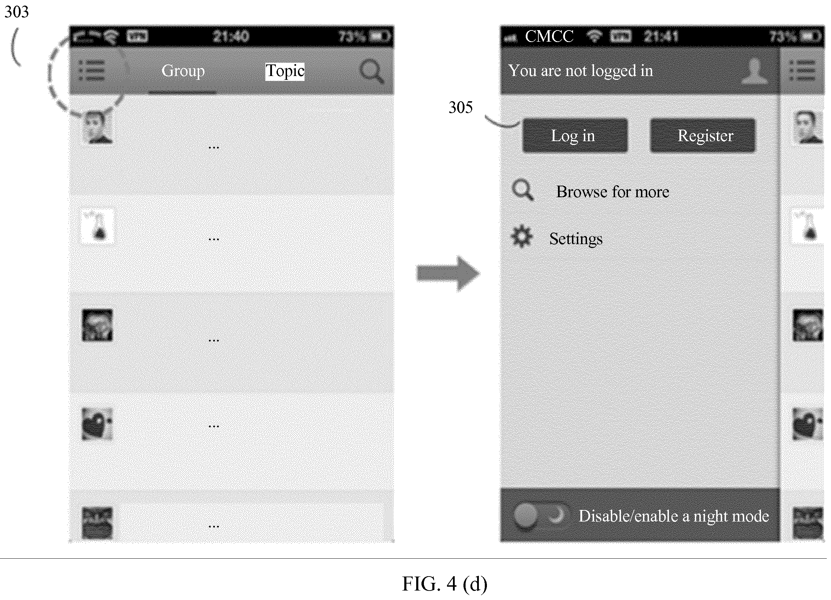

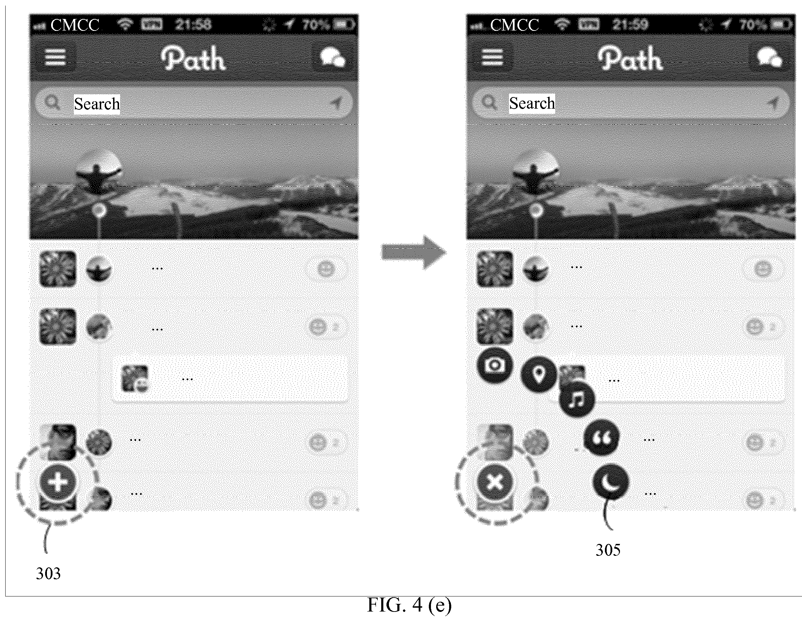

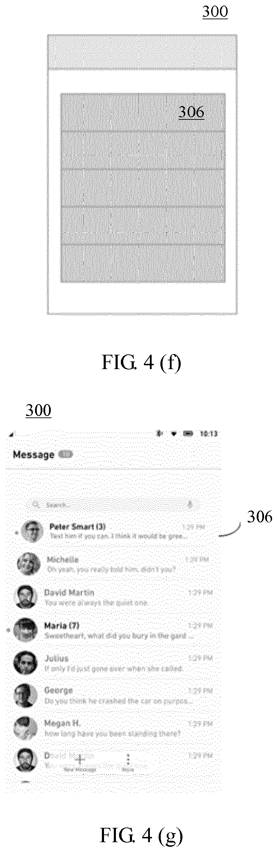

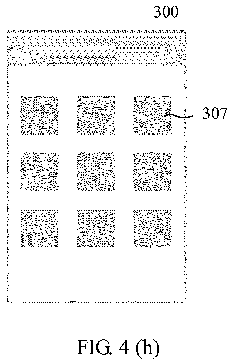

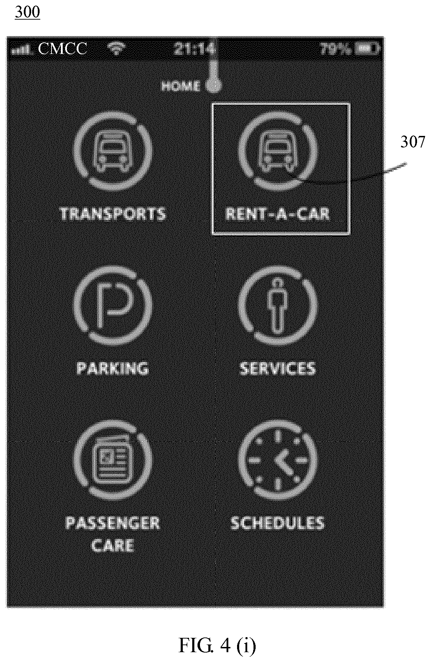

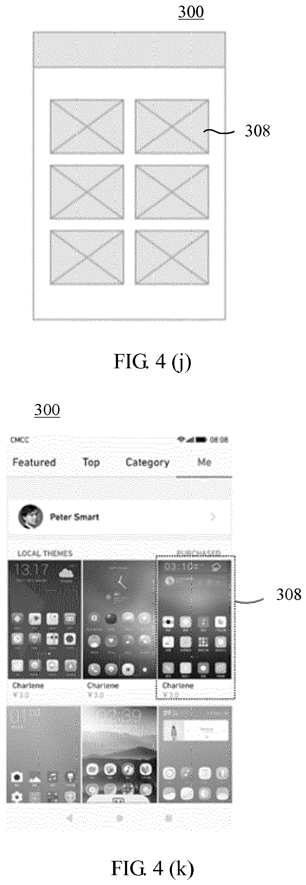

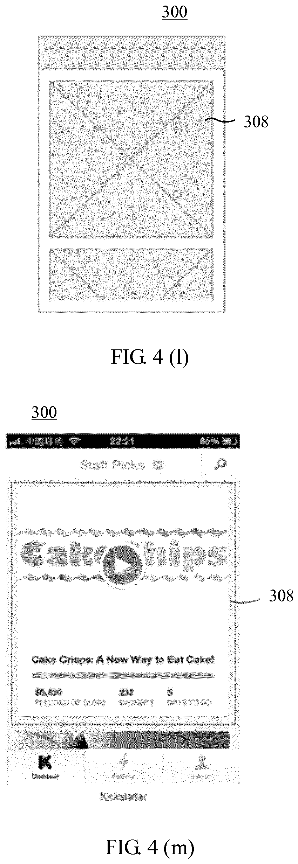

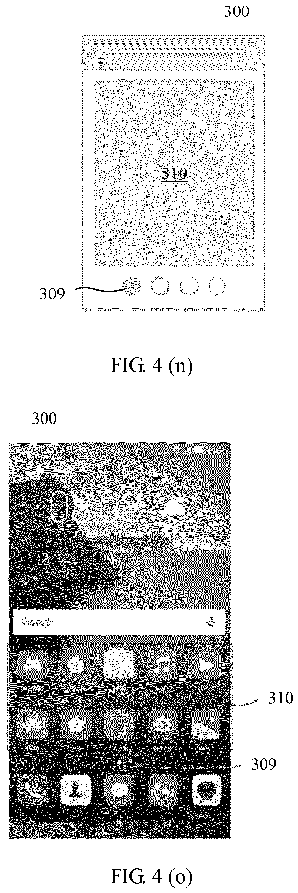

The user interface is used to present one or more pages at a single layer or at a plurality of layers. The user interface may be presented by using a plurality of types of interaction frameworks. Referring to FIG. 4 (a) and FIG. 4 (b), for example, the user interface 300 is presented by using a framework in a label form. When the user selects any label 301, the user interface 300 jumps to a page corresponding to the label, that is, a page 302 corresponding to the label 301. As shown in FIG. 4 (c) and FIG. 4 (d), the user interface 300 can be further presented in a drawer form. When the user taps a drawer-form extension icon 303, a hidden page 305 used for navigation is extended in the user interface (the sub-interface 305 is displayed in the user interface when being tapped, and may cover all or a part of a current interface 304). The page 305 is a page with an entry for entering another page. Similarly, as shown in FIG. 4 (e), the user interface 300 is presented in a dot-gathering form. That is, an icon used to enter a sub-interface is hidden in a specific icon (such as a dot icon). When the user taps the icon, hidden icons used to enter pages are extended around the icon. The user interface 300 can be further presented by using a framework in a list form shown in FIG. 4 (f) and FIG. 4 (g), a springboard form shown in FIG. 4 (h) and FIG. 4 (i), an exhibition gallery form shown in FIG. 4 (j) and FIG. 4 (k), or a waterfall form shown in FIG. 4 (1) and FIG. 4 (m). The user can tap a list 306, an icon 307, or a thumbnail 308 in the user interface 300 to jump to a detail page (not shown) for viewing. In addition, the user interface 300 can be further presented by using a framework in a rotation form shown in FIG. 4 (n) and FIG. 4 (o). The user can perform a slide operation (for example, sliding from left to right or sliding from right to left) on the touch display, to rotate to different pages 310. A current screen identifier 309 notifies the user of a sequence number or a location of a current page 310. In some embodiments, an interaction framework may have pages at a plurality of layers. A framework presented in each page in the foregoing embodiment can still continue to have a page at a lower layer, and an implementation of the page at the lower layer is not limited.

FIG. 4 (b), FIG. 4 (d), FIG. 4 (e), FIG. 4 (g), FIG. 4 (i), FIG. 4 (k), FIG. 4 (m), and FIG. 4 (o) are schematic diagrams of specific application scenarios, to facilitate understanding of the foregoing description. However, specific scenarios and characters in the figures are not limited to those shown in the figures.

In some embodiments, an entire page or a part of a page that is directly seen on the touch display 200 may be presented on the touch display 200 of the mobile terminal 100. Each page may include a plurality of types of graphs. The graphs may include presentation elements such as a character, a table, an image, an animation, a video, and audio. The graphs may be electronic documents, item lists, thumbnails, digital images, application icons, or the like.

In some embodiments, the touch display 200 displays only a part of graphs in a page, detects an operation action of the user, and correspondingly displays, according to movement of the operation action, a process of translating the page, for example, displaying an item list in a scrolling manner, displaying an electronic document in a translation manner, or displaying multi-screen switching in a rotation manner. The movement of the operation action includes acceleration, a speed, a direction, displacement, and the like. In the process of translating the page, a corresponding direction, a corresponding translation rate, and corresponding acceleration may be determined according to the movement of the operation action.

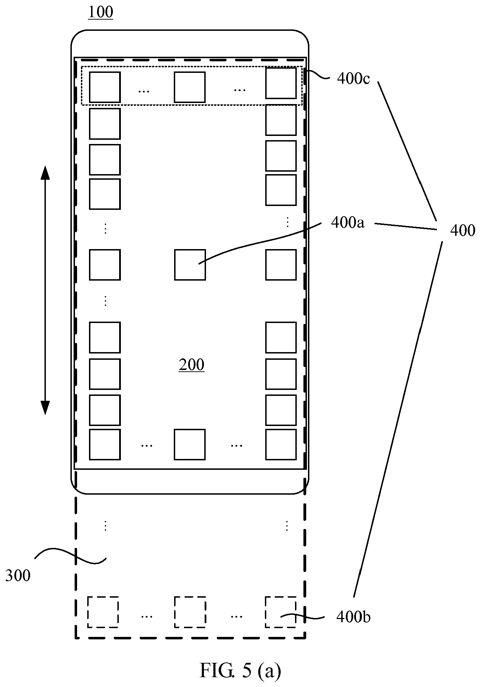

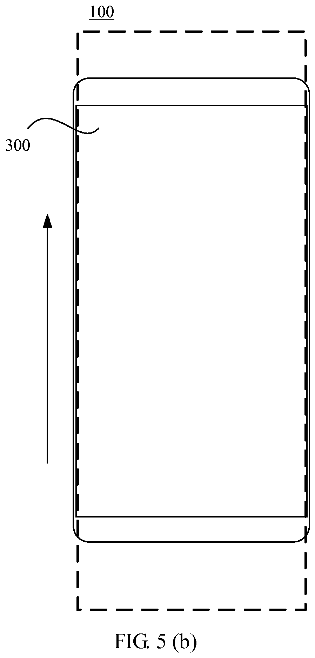

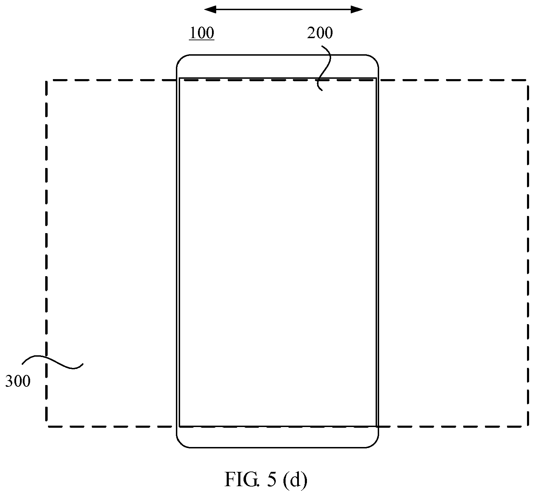

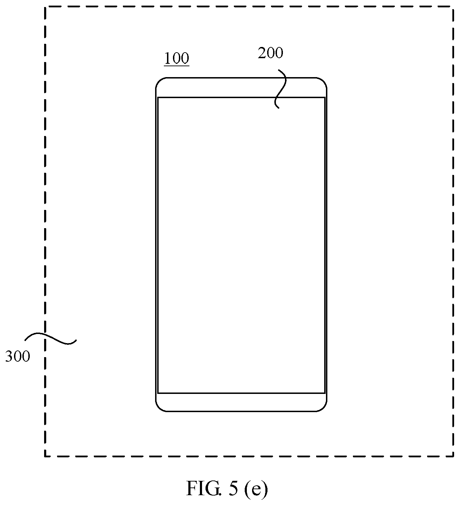

In some embodiments, with reference to FIG. 5 (a) to FIG. 5 (c), the touch display 200 of the mobile terminal 100 presents a part of a page 300, and the page 300 has a plurality of graphs 400, including a graph 400 (a) that is displayed on the touch display 200 at a specific moment, and a graph 400b that is not displayed on the touch display 200 at the moment. The user can perform a slide operation on the touch display 200, to display a part of area or an entire area of the page 300. As shown in FIG. 5 (b), the page 300 is translated upwards according to an action of a finger, and the other part is displayed. If the user continuously performs a plurality of times of slide operations from bottom to top, the page 200 is translated upwards and a bottom page boundary of the page 200 is reached. In some embodiments, for the touch display 200 and the page 300 shown in FIG. 5 (d), the user slides leftwards/rightwards on the touch display 200, to movably display the page 200 by moving the page 200 leftwards and rightwards accordingly. In some embodiments, for the touch display 200 and the page 300 shown in FIG. 5 (e), the user may slide leftwards/rightwards or upwards/downwards on the touch display 200, to movably display the page 200 by moving the page 200 accordingly.

In some embodiments, according to changes of a rate, an amplitude, a direction, and acceleration of a slide operation, a corresponding movement change also occurs when the mobile terminal 100 translates the page 300. Translation acceleration of the page 300 may be determined according to a friction model, that is, in a manner of simulating damping movement. Content in the page 300 may include any one or any combination of a character, an image, a video, or audio. Any content in the page 300 may have a hyperlink attribute of jumping to another page.

In some embodiments, the page may be translated in a manner of simulating friction movement.

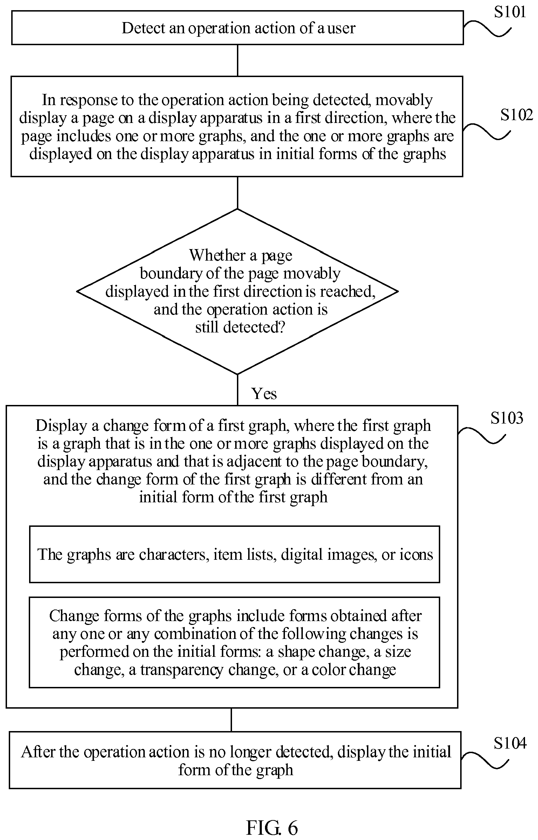

FIG. 6 is a flowchart of a method for translating a page according to some embodiments. The method provides a method for notifying a user that a page boundary is currently reached.

First, in step S101, an operation action of a user is detected. In some embodiments, a detection process is continuously performed by a mobile terminal 100 in real time.

After obtaining an input signal, an input apparatus of the mobile terminal 100 sends the input signal to a processor 180. The processor 180 processes the input signal, and detects the operation action of the user from the input signal. In some embodiments, a detection method may be any one or any combination of the following methods:
(1) A touch display obtains a touch signal, and sends the touch signal to the processor. The processor detects, from the touch signal, a touch action that meets a preset condition. In some embodiments, the touch action is movement performed on the touch display by using a finger of the user or a stylus.
(2) A physical button obtains a pressing signal, and sends the pressing signal to the processor. The processor detects, from one or more pressing signals, pressing input that meets a preset condition, to detect a pressing instruction.
(3) A microphone obtains an audio signal, and sends the audio signal to the processor. The processor performs voice recognition and analysis on the audio signal, to detect a voice instruction.
(4) A camera obtains a video signal, and sends the video signal to the processor. The processor performs image recognition and analysis on the video signal, to detect a gesture action, a body action, and an eyeball action.
(5) In addition, an electroencephalogram obtaining instrument directly obtains an electroencephalogram signal of the user, and sends the electroencephalogram signal to the processor. The processor analyzes the electroencephalogram signal, to detect a mind instruction of the user.

Then, in step S102, in response to the operation action being detected, a page is movably displayed on the display apparatus in a first direction, where the page includes one or more graphs, and the one or more graphs are displayed in initial forms.

In some embodiments, each page may include one or more graphs, and the plurality of graphs may be a plurality of types of graphs. The graphs may include elements such as a character, a table, an image, an animation, a video, and audio. The graphs may be electronic documents, characters, item lists, digital images, icons, animations, videos, or the like. In some embodiments, the graphs are short message lists. In some embodiments, the graphs may be further other lists, for example, email message lists, contacts lists, lists of third-party instant messaging messages, folder lists, memo lists, album name lists, financial bill lists, web browsing message lists, system setting item lists, document lists, or bookmark lists. In some embodiments, the electronic documents may be documents including presentation elements such as a character, a table, an image, an animation, a video, and audio, for example, character documents, presentation documents, emails, electronic spreadsheets, or web pages. The thumbnails may be gallery thumbnails, application entry thumbnails, or the like. The icons may be application icons, category icons, or the like.

In some embodiments, the first direction is a direction in which the page is moved on the touch display 200, and may be a vertical direction, a horizontal direction, and an oblique direction. The first direction is corresponding to a direction of the operation action, but may not be the same as the direction of the operation action. For example, when the user slides on the touch display in a vertical direction, a corresponding first direction is the vertical direction. In some embodiments, if an included angle between a sliding direction of the user on the touch display and the vertical direction is less than an oblique angle range (as an example instead of a limitation, less than 30°), the sliding direction of the touch action of the user may be detected, and may be projected to the vertical direction according to a projection principle, and the page is translated in the vertical direction obtained after the projection.

In some embodiments, for a control manner for recognizing a user gesture, when a gesture action performed by the user in the air is sliding in the vertical direction, a corresponding first direction on the touch display 200 is the vertical direction.

In some embodiments, before the page boundary is reached, a moving rate of the page may be corresponding to a moving rate of the operation action of the user, so that operation experience of the user is closer to reality. In some embodiments, when the finger of the user slides on the touch display at a specific speed, the page is driven to be translated at a corresponding moving rate. Then, if the finger of the user suddenly leaves the touch display, the page may be moved in a deceleration manner according to a principle of friction movement, until movement is stopped.

In this case, the initial forms are forms such as colors, shapes, sizes, and transparency of the graphs when the graphs are normally displayed.

Then, the mobile terminal performs step S103: determining whether the page boundary is reached, that is, an end of the page is reached, when the displayed page is moved in the first direction; and if the page boundary is reached, and in this case, the corresponding operation action is still detected, displaying a change form of at least one of the plurality of graphs that is adjacent to the boundary, where the change form of the graph is different from the initial forms.

In some embodiments, in response to a fact that the page boundary is reached when the page is moved in the first direction, and the operation action is still detected, the mobile terminal 100 may further play an alert sound. The user is further prompted by playing the alert sound.

In some embodiments, the mobile terminal 100 may detect, in real time, whether the page boundary is reached when the page 300 is moved.

There is specific processing duration from detection to response of the mobile terminal 100. In some embodiments, it may be set that the mobile terminal 100 makes a response when it is detected that the page boundary is to be reached when the page 300 is moved.

For example, when the mobile terminal 100 detects that the page is moved to a boundary of a display area, where a distance between the boundary of the display area and the page boundary corresponding to the page is less than a distance threshold (for example, the distance threshold is but is not limited to 2 millimeters), and determines that the operation action still exists currently, the mobile terminal 100 displays the change form of the at least one of the plurality of graphs that is adjacent to the boundary.

For another example, an expected time at which the page boundary of the page and the boundary of the display area of the touch display 200 overlap is calculated according to a moving speed and acceleration of the page, and the distance between the boundary of the display area and the page boundary corresponding to the page. When the expected overlapping time is less than a time threshold (for example, the time threshold is but is not limited to 0.1 second), and it is determined that the operation action still exists currently, the change form of the at least one of the plurality of graphs that is adjacent to the boundary is displayed.

In some embodiments, after the mobile terminal 100 detects that the page boundary is reached when the page 300 is moved, and detects that duration of the operation action exceeds a specific threshold (as an example instead of a limitation, after the page boundary is reached when the page 300 is moved, it is detected that duration of continuous sliding performed by the user exceeds 0.1 second, or it is detected that a distance of continuous sliding performed by the user exceeds 2 millimeters), the mobile terminal 100 may alternatively display the change form of the at least one of the plurality of graphs that is adjacent to the boundary.

In the foregoing manner of responding, in advance, to the page boundary being reached or responding, later, to the page boundary being reached, the mobile terminal 100 can prompt the user in a more flexible manner, and interact with the user more fluently according to a usage habit of the user. After the mobile terminal 100 responds, for a display manner of displaying the change form of the at least one of the plurality of graphs that is adjacent to the boundary, refer to the embodiments in this specification.

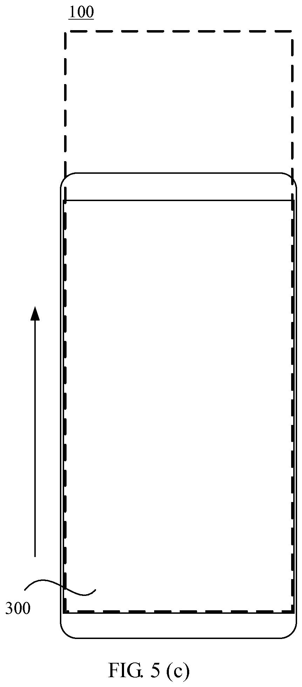

With reference to FIG. 5 (a) to FIG. 5 (c), the touch display 200 displays all or a part of the page 300. When the mobile terminal 100 detects the operation action that the finger of the user moves in the first direction, the page 300 is moved in a direction corresponding to the first direction. As shown in FIG. 5 (c), when the mobile terminal 100 detects that the page boundary and the boundary of the display area of the touch display 200 overlap, the mobile terminal 100 determines that the page boundary is reached when the displayed page is currently moved. For example, as shown in FIG. 5 (a), the finger of the user slides on the touch display 200 from bottom to top or from bottom to top. When the finger moves from top to bottom (that is, the first direction is a downward moving direction along the touch display 200), and a top page boundary of the page 400 is reached, forms of several first graphs 400c that are adjacent to the top page boundary of the page 400 change, and change forms of the graphs are displayed.

Further, for the moving page, determining may be performed in advance, to respond in time when the boundary of the page is reached. Specifically, in some embodiments, a determining method may further include: detecting, by the mobile terminal, a current moving direction, a moving speed, and moving acceleration of the page, and a display boundary of the touch display; determining, according to the moving direction, a boundary of the page that is expected to reach; estimating, according to the moving speed and the moving acceleration, an expected time at which the boundary is to be reached; and when the expected time arrives, detecting whether the boundary of the page and the boundary of the display area of the touch display 200 overlap, and if the boundary of the page and the boundary of the display area of the touch display 200 overlap, determining that the boundary of the displayed page is reached. During this period, if any of the moving direction, the moving speed, and the moving acceleration of the page changes, calculation is re-performed.

In some embodiments, a form change of the graphs includes any one or any combination of the following changes: a shape change, a size change, a transparency change, or a color change. For example, the graphs (such as icons, characters, thumbnails, or lists) become larger or smaller, the graphs gradually change from rectangles to trapezoids, and then gradually change to triangles, transparency of the graphs gradually becomes higher, or colors of the graphs gradually change from multi-color to gray.

It should be noted that, a shape change or a size change of the graphs is a change of shapes and sizes of the graphs, and a case in which a part of area of the graphs is moved out of a display area of the display apparatus and a remaining area is displayed on the display area of the display apparatus does not belong to the change of the shapes or sizes of the graphs.

In some embodiments, the graph that is adjacent to the boundary may be a graph or a row of graphs closest to the boundary, or may be last several graphs or last several rows of graphs starting from the boundary. For example, an item list has a first row, a last row, a first column, and a last column. The graph that is adjacent to the boundary may be in the first row, the last row, the first column, or the last column. Graphs at the boundary or adjacent to the boundary may be graphs in the first row to a third row, graphs in the last row to an antepenultimate row, graphs in the first column to a third column, or graphs in the last column to an antepenultimate column.

Certainly, persons skilled in the art can understand that the first row or the third row is merely an example for description. A specific quantity of adjacent graphs may be specifically set according to an actual scenario, and is not limited herein.

In addition to the graph that is adjacent to the boundary, the page may further include one or more graphs that are not adjacent to the boundary. The one or more graphs that are not adjacent to the boundary are displayed in initial forms from beginning to end, and the forms do not change.

The change form of the graph adjacent to the boundary in the page may be displayed in various preferred manners. For example, a form obtained after the graph directly changes is displayed, and the form obtained after the change is displayed instead of the initial form. Alternatively, a dynamically changed form that gradually changes from the initial form is displayed at a change phase.

In some embodiments, the change form may be a change form to which the initial form directly jumps and changes, and after the initial form jumps to the change form, the change form of the graph is displayed in a static manner when it is detected that the operation action is continuously performed. For example, when the boundary is reached when the page is moved in the first direction, and the touch action performed on the touch display by using the finger of the user is detected, displaying an icon that is adjacent to the boundary in the page and that is of an initial size directly switches to displaying an icon obtained after the icon of the initial size is zoomed out, and the icon obtained after the icon of the initial size is zoomed out is displayed until the user ends the touch action. For another example, when the boundary is reached when the page is moved in the first direction, and the operation action is detected, displaying a quadrilateral icon adjacent to the boundary in the page directly switches to displaying a triangular icon, and the triangular icon is displayed until the user ends the touch action.

In some embodiments, the change form may gradually dynamically change from the initial form. That is, when it is detected that the operation action is continuously performed, the change form that is of the at least one graph adjacent to the boundary in the page and that dynamically changes is displayed, and if an action range of the operation action is larger, a form change from the initial form to the change form is larger, that is, the change form looks more different from the initial form. For example, starting from a time when the boundary is reached when the page is moved in the first direction, and the touch action performed on the touch display by using the finger of the user is detected, a dynamic change that the icon adjacent to the boundary in the page is directly gradually zoomed out from the initial size is displayed, and if a moving range of the touch action is larger, a size of the icon is smaller. The moving range of the touch action is subject to a moving range in the first direction herein, that is, if a moving distance that is of the touch action and that is in the first direction is larger, the moving range of the touch action is larger.

In some embodiments, the change form may gradually dynamically change from the initial form when the operation action is not beyond a specified range. However, if the operation action is beyond a specific range, the change form does not gradually change. That is, if it is detected that the operation action is continuously performed, the change form that is of the at least one graph adjacent to the boundary in the page and that dynamically changes is displayed, and if the action range of the operation action is larger within a preset range, the form change from the initial form of the graph to the change form is larger, that is, the change form looks more different from the initial form. When the action range of the operation action exceeds the preset range, a static change form of the graph is displayed. For example, starting from a time when the boundary is reached when the page is moved in the first direction, and the touch action performed on the touch display by using the finger of the user is detected, a dynamic change that the icon adjacent to the boundary in the page is directly gradually zoomed out from the initial size is displayed, and if a moving range of the touch action is larger, a size of the icon is smaller. When the moving range of the touch action exceeds the preset range, the size of the icon is maintained at a size obtained when the moving range reaches the preset range, and is no longer reduced. The moving range of the touch action is subject to a moving range in the first direction herein, that is, if a moving distance that is of the touch action and that is in the first direction is larger, the moving range of the touch action is larger.

In some embodiments, when the boundary is reached, the change form of the graph may be presented by transforming a size change of the graph or a change of the graph, and specific steps include: A1. Determine the at least one graph adjacent to the reached boundary in the page, and obtain location coordinates on the touch display that are of each pixel of the at least one graph adjacent to the boundary. B1. Determine a transformation parameter of the coordinates of each pixel according to a size change rule. C1. Determine new location coordinates of each pixel according to the transformation parameter. D1. Re-depict and display each pixel of the graph at the new location coordinates of the pixel, to display the change form.

In some embodiments, for a case in which the change form of the graph is presented by using a shape change, the shape change may be further displayed in a tailoring manner, and specific steps include: A2. Determine the at least one graph adjacent to the reached boundary in the page, and obtain location coordinates on the touch display that are of each pixel of the at least one graph adjacent to the boundary. B2. Determine a changed shape according to a size change rule, and determine a to-be-deleted pixel and a transformation parameter of coordinates of each to-be-reserved pixel according to a correspondence between a shape prior to the change and the changed shape, that is, tailor the initial form of the graph. C2. Determine new location coordinates of each to-be-reserved pixel according to the transformation parameter. D2. Re-depict and display the reserved pixel at the new location coordinates of the reserved pixel, to display the change form.

In some embodiments, when the boundary is reached, the change form of the graph may be presented by using a transparency or grayscale change. Specifically, a transformation parameter is determined according to a transparency or grayscale change rule, changed transparency or a changed grayscale is determined according to the transformation parameter, and the graph is re-depicted and displayed according to the changed transparency or grayscale, to display the change form.

In some embodiments, in step S13, in the graphs adjacent to the boundary in the page displayed on the touch display 200, if a graph is closer to the page boundary in the first direction, a form change from an initial form of the graph to a change form of the graph is larger.

In some embodiments, the transformation parameter may be a constant, or may be a variable. The variable may be related to displacement D of the operation action of the user, or a rank N of each graph obtained after ranking until the page boundary, or may be related to both of the displacement and the rank, so as to directly jump to display the change form, or display, according to an amplitude of the operation action of the user, the change forms that gradually change, and a pattern of a stepped change of a plurality of graphs that starts from the page boundary.

For a manner of displaying a change form of a graph whose size is reduced, a transformation parameter Parameter of coordinates of each pixel is related to a zoom-out ratio Item of the size of the graph, that is, Parameter = F(Item).

In some embodiments of specific scenarios, for a zoom-out ratio ItemN for a size of each graph, ItemN = S + ((N - 1) × D), where N is a rank obtained after ranking from the page boundary, D is a stepped change ratio between graphs of adjacent ranks, and S is a zoom-out ratio of a first graph or a first row of graphs obtained after ranking from the page boundary. For example, if the zoom-out ratio of the first graph obtained after ranking from the page boundary is 0.2, and the stepped change ratio between graphs of adjacent ranks is 0.2, zoom-out ratios of four graphs adjacent to the page boundary are as follows: The zoom-out ratio of the first graph is 0.2 (that is, a size of a change form is 20% of a size of an initial form), a zoom-out ratio of a second graph is 0.4, a zoom-out ratio of a third graph is 0.6, and a zoom-out ratio of a fourth graph is 0.8.

The method may further include step S104. In step S104, after step S103, in response to the operation action being no longer detected, the mobile terminal displays the graphs in the page, and the graphs are displayed in the initial forms.

In some embodiments, when a hand of the user leaves the touch display 200, the mobile terminal 100 no longer detects the operation action, and displays a process in which the graph in the page is restored from the change form to the initial form (that is, an initial form prior to the change).

In some embodiments, a manner of restoring from the change form to the initial form may be a jumping change, that is, a direct update from the change form to the initial form.

In some embodiments, in a manner of restoring from the change form to the initial form, a tweened animation of gradually restoring the graph from the change form to the initial form may be displayed, that is, gradual restoration of the graph from the change form is presented within specific duration, until the initial form is displayed.

The method further includes: in response to the page boundary being reached when the page is moved in the first direction, and the operation action is still detected, continuing to move the page, and displaying an area beyond the page boundary, where the area is different from the page; and in response to the operation input being no longer detected, moving the page in a second direction opposite to the first direction, until the area is no longer displayed.

In some embodiments, the mobile terminal 100 may present the area beyond the page boundary in a delayed presentation manner. Specifically, in response to the page boundary being reached when the page is moved in the first direction, the mobile terminal 100 stops, for a short time, moving the page, and after detecting that the operation action lasts for over a specific threshold (as an example instead of a limitation, after the page boundary is reached when the page 300 is moved, it is detected that the user continuously slides for over 0.1 second, or it is detected that the user continuously slides for over 2 millimeters), continues to move the page and displays the area beyond the page boundary.

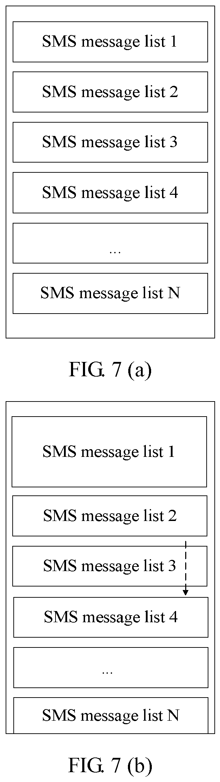

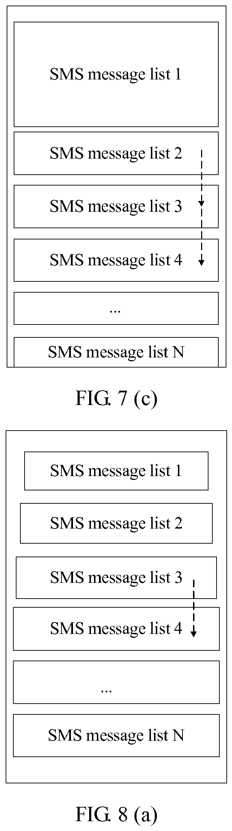

FIG. 7 (a) to FIG. 7 (c) are schematic example diagrams of a page of a scrolling list according to some embodiments. In some embodiments, an example in which SMS message lists are presented in the page is used to provide a detailed description. As shown in FIG. 7 (a), in an initial state, sizes of all SMS messages in the SMS message lists may be basically the same.

When the mobile terminal 100 detects that the finger of the user slides upwards or downwards on the touch display, the SMS message lists in the page are displayed in the page in a translation manner according to the slide operation.

In some embodiments, as shown in FIG. 7 (b), when the mobile terminal 100 detects that the finger of the user slides downwards on the touch display, and the page is translated downwards and a top boundary of the page is reached, if it is still detected that the user slides downwards on the touch display, an animation of longitudinally widening an SMS message list 1 in the page is presented. That is, when the top boundary of the page is reached, widening of the SMS message list 1 starts to be displayed, and as a distance of the downward sliding performed by using the finger of the user becomes longer, the displayed SMS message list 1 is wider. In some embodiments, it may be set that, in a process in which the distance of the downward sliding performed by using the finger of the user becomes longer, the displayed SMS message list is no longer zoomed out after being zoomed out to a specific size accordingly. After the user releases the finger, the SMS message list 1 is gradually zoomed in, and is restored to a size in an initial state that is shown in FIG. 7 (a) and in which morphing is not performed. An animation of a restoration process thereof may be in a manner of displaying gradual restoration, or a manner of displaying immediate restoration (jumping restoration).

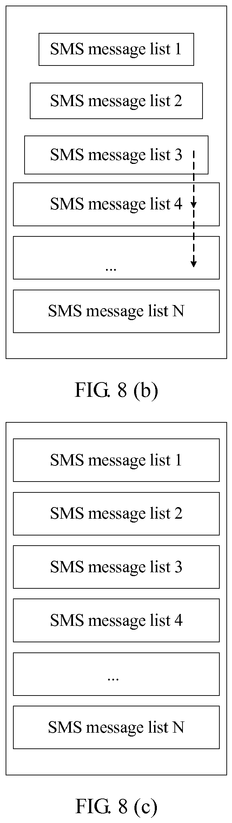

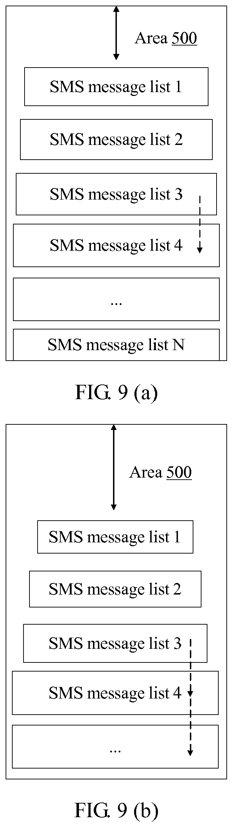

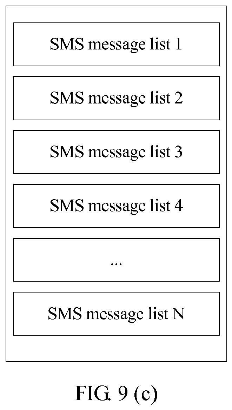

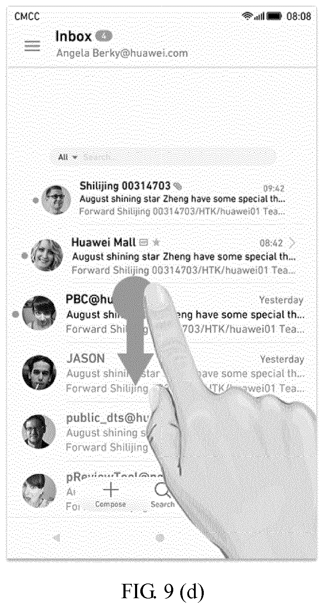

In some embodiments, when the finger of the user slides downwards on the touch display, and the page is translated downwards and the top boundary of the page is reached, if it is still detected that the user slides downwards on the touch display, as the user continues the slide operation, as shown in FIG. 8 (a), an animation of zooming out an SMS message list 3, an SMS message list 2, and an SMS message list 1 in the page is presented. That is, when the top boundary of the page is reached, a process of zooming out the SMS message list 3, the SMS message list 2, and the SMS message list 1 starts to be displayed, and decreasing zoom-out occurs from the SMS message list 3 to the SMS message list 2, and then to the SMS message list 1. In addition, as shown in FIG. 8 (b), as the distance of the downward sliding performed by using the finger of the user becomes longer, a change that the SMS message list 3, the SMS message list 2, and the SMS message list 1 become smaller is displayed. After the user releases the finger, the SMS message list 3, the SMS message list 2, and the SMS message list 1 are restored to sizes in an initial state (that is, a non-morphed state) shown in FIG. 8 (c). An animation of a restoration process thereof may be in a manner of displaying gradual restoration, or a manner of displaying jumping restoration. In some embodiments, when the page boundary is reached and the operation action is still detected, the animation of zooming out the SMS message lists shown in FIG. 8 (a) is displayed; in addition, as shown in FIG. 9 (a), continuing to move the entire page downwards may be displayed, and an area 500 beyond the page boundary may be displayed. As shown in FIG. 9 (b), as the distance of the downward sliding performed by using the finger of the user becomes longer, the area 500 beyond the page boundary becomes larger. In some embodiments, it may be set that, in the process in which the distance of the downward sliding performed by using the finger of the user becomes longer, after reaching a specific size, the area 500 beyond the page boundary no longer becomes larger. The area 500 beyond the page boundary may be a blank area. After the user releases the finger, as shown in FIG. 9 (c), the SMS message lists are restored to sizes in an initial state, that is, an initial state in which morphing is not performed, and at the same time, the page boundary is restored to a location at which the page boundary is aligned to a boundary of the touch display, and the area 500 beyond the page boundary is no longer displayed. An animation of a restoration process thereof may be an animation of directly jumping to a restored display pattern, or an animation of translating the page back in a direction opposite to the first direction in a resiling manner, until the area 500 beyond the document boundary is no longer displayed. With reference to FIG. 9 (b), FIG. 9 (d) is a schematic diagram of a change form of an SMS message list in a user interface when the page boundary is reached, and it is still detected that the finger of the user performs the sliding touch action on the touch display in some embodiments of specific scenarios.

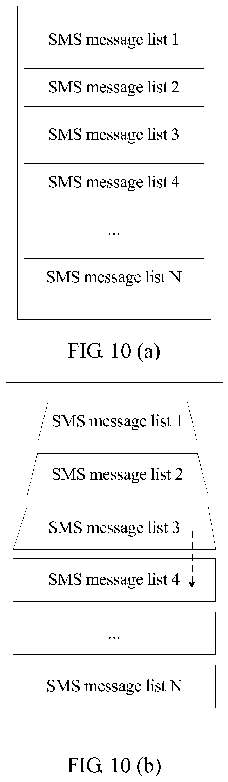

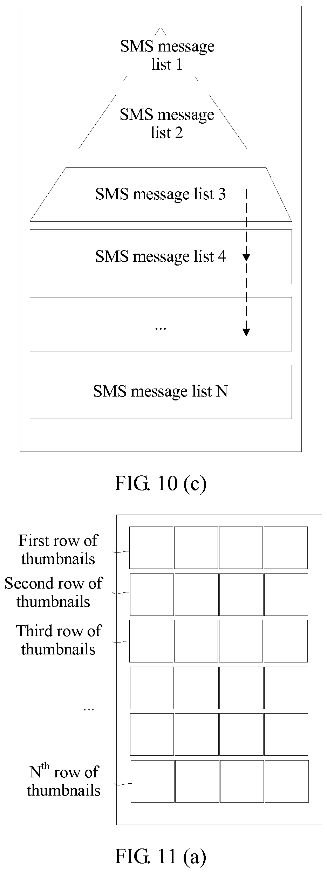

FIG. 10 (a) to FIG. 10 (c) are schematic example diagrams of a form change of a scrolling list according to some embodiments. In some embodiments, when the finger of the user slides downwards on the touch display, and the page is translated downwards and the top boundary of the page is reached, if it is still detected that the user slides downwards on the touch display, as the user continues the slide operation, as shown in FIG. 10 (b), an animation of a shape change of an SMS message list 3, an SMS message list 2, and an SMS message list 1 in the page is presented. That is, when the top boundary of the page is reached, trapezoid morphing of the SMS message list 3, the SMS message list 2, and the SMS message list 1 starts to be displayed, and decreasing zoom-out occurs from the SMS message list 3 to the SMS message list 2, and then to the SMS message list 1. In addition, as shown in FIG. 10 (c), as the distance of the downward sliding performed by using the finger of the user becomes longer, a greater trapezoid change and smaller sizes of the SMS message list 3, the SMS message list 2, and the SMS message list 1 are displayed, and the SMS message list 1 even changes to a triangle. After the user releases the finger, the SMS message list 3, the SMS message list 2, and the SMS message list 1 are restored to sizes in an initial state (that is, a non-morphed state) shown in FIG. 10 (a). An animation of a restoration process thereof may be in a manner of displaying gradual restoration, or a manner of displaying jumping restoration. In addition, in these embodiments, a manner of displaying the area 500 shown in FIG. 9 (a) to FIG. 9 (c) may be further referenced. For brevity, details are not described again, and are incorporated herein by reference.

FIG. 11 (a) to FIG. 11 (f) are schematic example diagrams of a form change that occurs when thumbnails are translated according to some embodiments. In some embodiments, an example in which thumbnails of a gallery are presented in the page is used to provide a detailed description.

As shown in FIG. 11 (a), in an initial state, sizes of a same type of thumbnails may be basically the same. When the finger of the user slides upwards or downwards on the touch display, the thumbnails in the page are displayed in the page in a translation manner according to the slide operation.

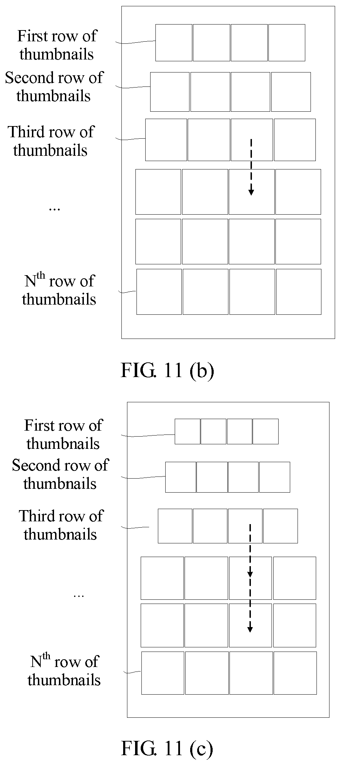

In some embodiments, as shown in FIG. 11 (b), when the finger of the user slides downwards on the touch display, and the page is translated downwards and the top boundary of the page is reached, if it is still detected that the user slides downwards on the touch display, as the user continues the slide action, an animation of zooming out thumbnails in a first row, a second row, and a third row in the page is presented. That is, when the top boundary of the page is reached, a process of zooming out the thumbnails in the third row, the second row, and the first row starts to be displayed, and decreasing zoom-out occurs in the thumbnails from the third row to the second row, and then to the first row. Then, as shown in FIG. 11 (c), as the distance of the downward sliding performed by using the finger of the user becomes longer, smaller thumbnails (which are zoomed out in an equal proportion) are displayed in the third row, the second row, and the first row. After the user releases the finger, the thumbnails in the first row, the second row, and the third row are restored to sizes in an initial state shown in FIG. 11 (a). An animation of a restoration process thereof may be in a manner of displaying gradual restoration, or a manner of displaying immediate restoration.

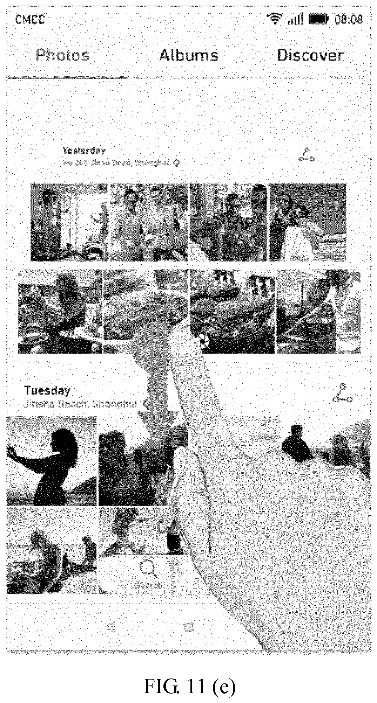

In some embodiments, as shown in FIG. 11 (e), when the finger of the user slides downwards on the touch display, and the page is translated downwards and the top boundary of the page is reached, if it is still detected that the user slides downwards on the touch display, as the user continues the slide action, a tweened animation of transparency of the thumbnails in the first row, the second row, and the third row in the page is presented. That is, when the top boundary of the page is reached, a gradual change of the transparency of the thumbnails in the third row, the second row, and the first row starts to be displayed, and the transparency of the thumbnails gradually becomes higher from the third row to the second row, and then to the first row. In addition, as the distance of the downward sliding performed by using the finger of the user becomes longer, the transparency of the thumbnails in the third row, the second row, and the first row becomes higher in an equal proportion.

In some embodiments, zoom-out ratios of the thumbnails in the first row, the second row, and the third row may follow the following formula:
ItemN = S + (N - 1) × D), where S is a zoom-out ratio, D is a decreasing ratio between all rows of thumbnails, and ItemN represents a zoom-out ratio of an N^{th} row of thumbnails. The zoom-out ratio S may vary with a change of a sliding distance of the user. When the sliding distance of the user is longer, the zoom-out ratio is smaller.

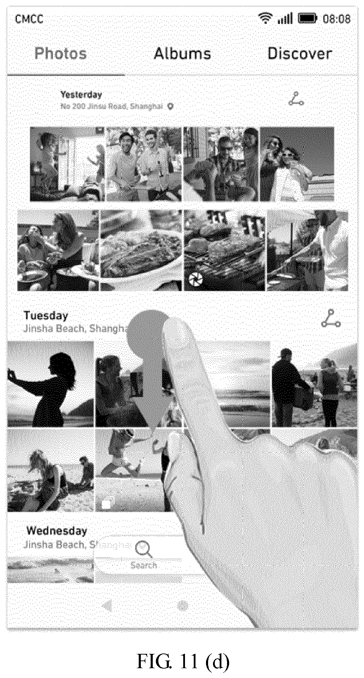

In some embodiments, continuing to move the entire page downwards may be further displayed, and an area beyond the page boundary may be displayed. For a display manner, refer to the embodiments shown in FIG. 9 (a) to FIG. 9 (c), and details are not described again. After the user releases the finger, the thumbnails in the first row, the second row, and the third row are restored to sizes in an initial state in which morphing is not performed. An animation of a restoration process thereof may be in a manner of displaying gradual restoration, or a manner of displaying immediate restoration. With reference to FIG. 11 (b), FIG. 11 (d) is a schematic diagram of change forms of thumbnails in a user interface when the page boundary is reached, and it is still detected that the finger of the user performs the sliding touch action on the touch display in some embodiments of specific scenarios.

In addition, in these embodiments, a manner of displaying the area 500 shown in FIG. 9 (a) to FIG. 9 (c) may be further referenced. For brevity, details are not described again, and are incorporated herein by reference. FIG. 11 (e) is a schematic diagram of an area beyond the page and change forms of thumbnails in a user interface when the page boundary is reached, and it is still detected that the finger of the user performs the sliding touch action on the touch display in some embodiments of specific scenarios.

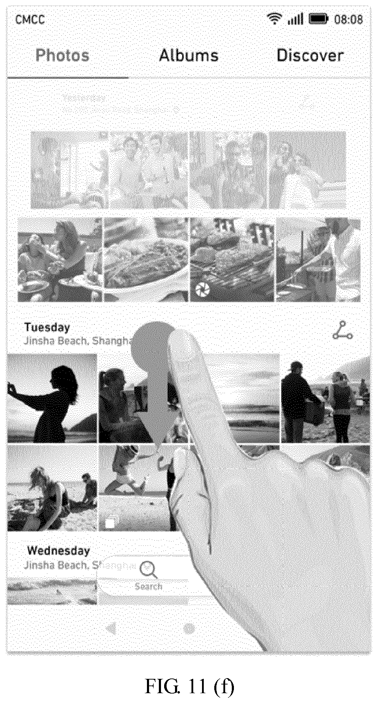

As shown in FIG. 11 (f), in some embodiments of specific scenarios, if the page boundary is reached when the page is moved in the first direction, and the operation action is still detected, a gradual change of transparency of at least one graph adjacent to the boundary in the page is displayed, to display a change form, so as to notify, in a manner easily perceived by the user, that the boundary of the page is reached.

In some embodiments, in a manner of displaying a change form by using a color change of a graph, for example, a gradual change (not shown in the figure) from a multi-color graph to a gray graph, an objective of notifying, in a manner easily perceived by the user, that the boundary of the page may also be achieved.

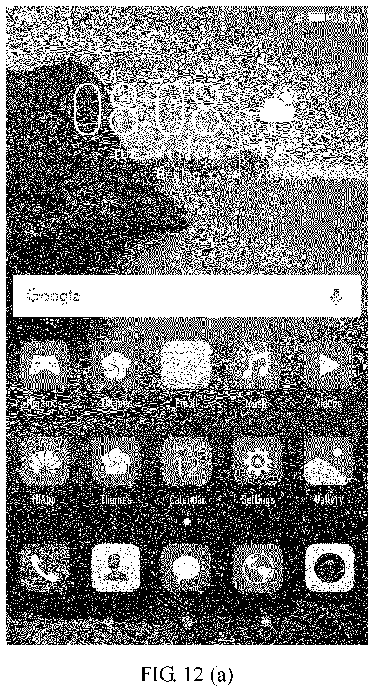

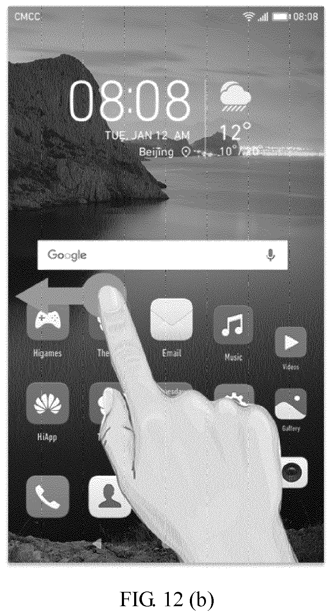

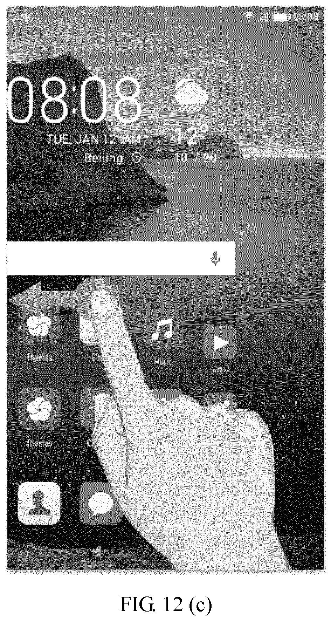

FIG. 12 (a) and FIG. 12 (b) are schematic example diagrams of a form change that occurs when icons are translated according to some embodiments. In some embodiments, an example in which application icons on a desktop are presented in the page is used to provide a detailed description. The desktop may have a plurality of screens, and each screen has one or more application icons. As shown in FIG. 12 (a), in an initial state, sizes of the application icons on the desktop may be basically the same. When the finger of the user slides leftwards and rightwards on the touch display, the page is moved leftwards or rightwards according to the slide operation, and after the page is moved to a specific extent, another screen is switched to. In some embodiments, as shown in FIG. 12b, when the finger of the user slides leftwards on the touch display, and the page reaches a rightmost screen of the desktop, if it is still detected that the finger slides rightwards on the touch display, an animation of zooming out application icons in several columns adjacent to a right boundary on the last screen is displayed. That is, on the rightmost screen of the desktop, when the finger of the user slides leftwards on the touch display, the displayed application icons in the several columns adjacent to the right boundary are decreasingly zoomed out in a direction pointing to the right boundary, and as the finger of the user continues to slide leftwards, the displayed application icons in the several columns proportionally become smaller. In some embodiments, as shown in FIG. 12 (c), continuing to move the entire page leftwards may be further displayed, and an area beyond the page boundary is displayed. After the user releases the finger, the application icons that are in the columns and that are proportionally zoomed out are restored to sizes in an initial state that is shown in FIG. 12 (a) and in which morphing is not performed.

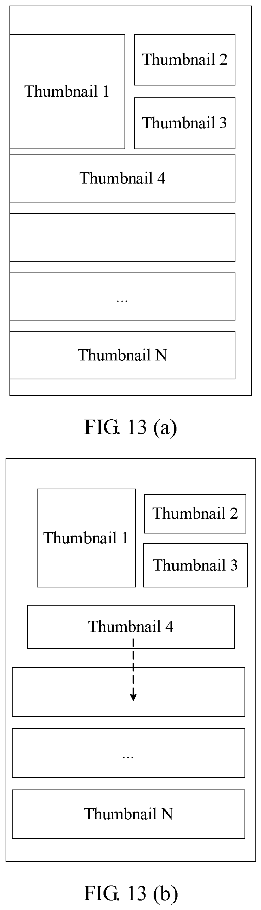

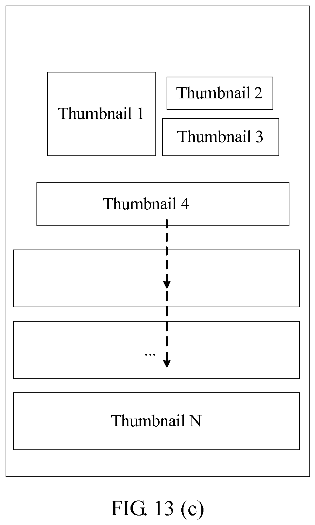

FIG. 13 (a) to FIG. 13 (c) are schematic example diagrams of a form change that occurs when thumbnails are translated according to some embodiments. In some embodiments, as shown in

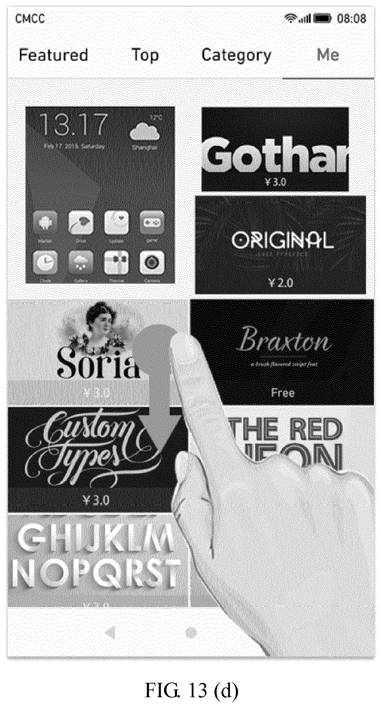

FIG. 13 (a), thumbnails of a plurality of shapes and sizes may be displayed in a user interface. When the finger of the user slides downwards on the touch display, and the page is translated downwards and the top boundary of the page is reached, if it is still detected that the user slides downwards on the touch display, as the user continues the slide action, an animation of zooming out a thumbnail 1, a thumbnail 2, and a thumbnail 3 in the page is presented. That is, when the top boundary of the page is reached, a process of zooming out the thumbnail 1, the thumbnail 2, and the thumbnail 3 starts to be displayed. In some embodiments, zoom-out ratios of the thumbnail 1, the thumbnail 2, and the thumbnail 3 may follow the following formula: ItemN = (S + (N - 1) × D), where S is a zoom-out ratio, D is a decreasing ratio between all thumbnails, and ItemN represents a zoom-out ratio of a thumbnail N. The zoom-out ratio S may vary with a change of a sliding distance of the user. When the sliding distance of the user is longer, the zoom-out ratio is smaller. That is, a change process from FIG. 13b to FIG. 13 (c) is displayed. With reference to FIG. 13b, FIG. 13 (d) is a schematic diagram of change forms of thumbnails in a user interface when the page boundary is reached, and it is still detected that the finger of the user performs the sliding touch action on the touch display in some embodiments of specific scenarios.

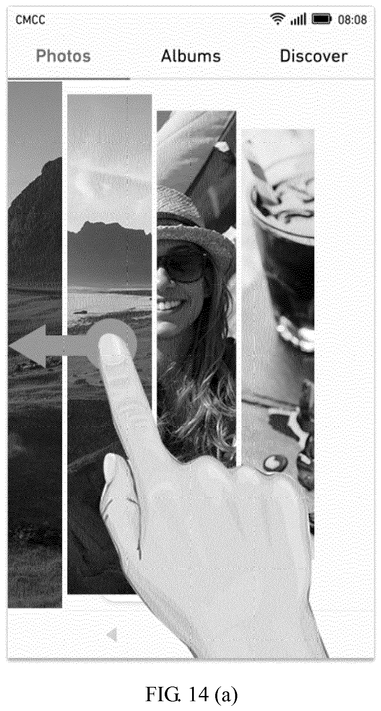

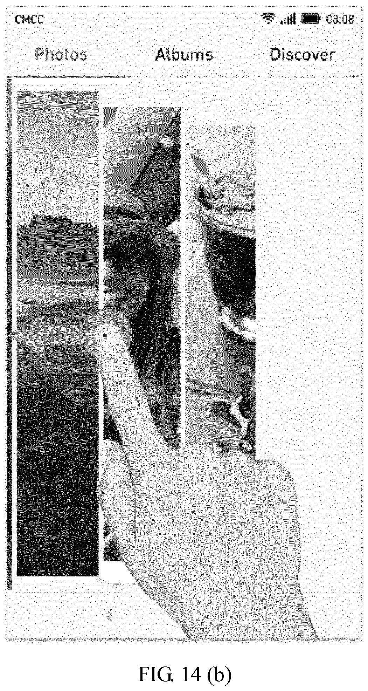

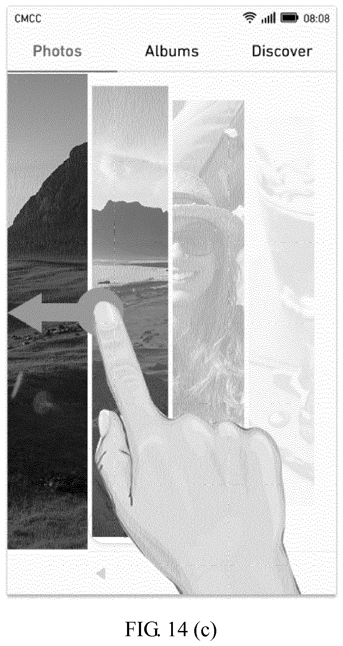

FIG. 14 (a) to FIG. 14 (c) are schematic example diagrams of a form change that occurs when thumbnails are translated leftwards according to some embodiments of specific scenarios. As shown in FIG. 14 (a), when the finger of the user slides leftwards on the touch display, and the page is translated leftwards and a right boundary of the page is reached, if it is still detected that the user slides leftwards on the touch display, as the user continues the slide action, similar to that shown in FIG. 8 (a) and FIG. 8b, an animation of zooming out the thumbnails in the page is displayed. As shown in FIG. 14b, correspondingly, similar to that shown in FIG. 9 (a) and FIG. 9b, an area 500 beyond the page and the animation of zooming out the thumbnails in the page are displayed. As shown in FIG. 14 (c), correspondingly, similar to that shown in FIG. 11 (f), a tweened animation of transparency of the thumbnails in the page is displayed. Details are not described again.

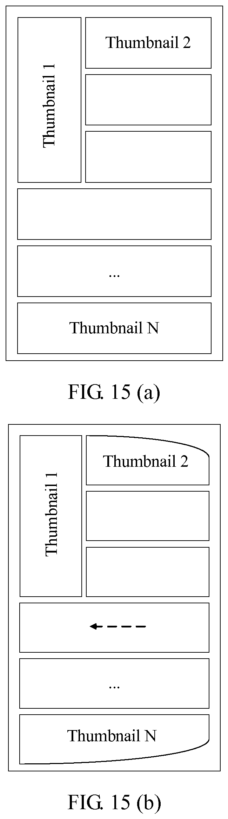

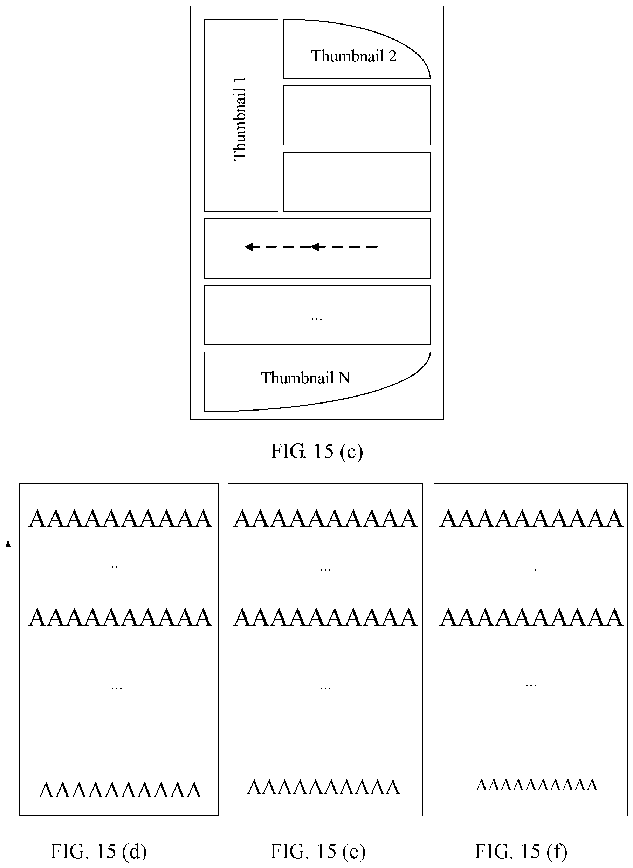

FIG. 15 (a) to FIG. 15 (c) are schematic example diagrams of a form change that occurs when thumbnails are translated according to some embodiments. As shown in FIG. 15 (a), in an initial state, sizes of the thumbnails may be different. When the finger of the user slides leftwards on the touch display, and the page is translated downwards and the right boundary of the page is reached, if it is still detected that the user slides leftwards on the touch display, as the user continues the slide action, as shown in FIG. 15 (b), morphing of boundaries of a thumbnail 2 and a thumbnail N in the page is displayed, and the boundaries gradually change from rectangular boundaries to arc-shaped boundaries. As a distance of the leftward sliding becomes longer, arc-shaped morphing becomes more apparent from FIG. 15 (b) to FIG. 15 (c). After the user releases the finger, the thumbnails are restored to sizes in an initial state that is shown in FIG. 15 (a) and in which morphing is not performed. An animation of a restoration process thereof may be in a manner of displaying gradual restoration, or a manner of displaying jumping restoration.

FIG. 15 (d) to FIG. 15 (f) are schematic example diagrams of a form change that occurs when characters are translated according to some embodiments. For example, the page may be a character web page. As shown in FIG. 15 (d), in an initial state, sizes of the characters in the page may be different. When the finger of the user slides upwards on the touch display, and the page is translated upwards and a bottom boundary of the page is reached, if it is still detected that the user slides upwards on the touch display, as the user continues the slide action, as shown in FIG. 15 (e), morphing of a last row of characters (such as AAAA...) at the bottom of the page is displayed, and a font size gradually becomes smaller. As a distance of the upward sliding becomes longer, morphing of reducing the font size becomes more apparent from FIG. 15 (e) to FIG. 15 (f). After the user releases the finger, the characters are restored to sizes in an initial state that is shown in FIG. 15 (d) and in which morphing is not performed. An animation of a restoration process thereof may be in a manner of displaying gradual restoration, or a manner of displaying jumping restoration.

In some embodiments, the method further includes step S105 and step S106. In step S105, in response to the fact that the operation action is no longer detected, the displayed page continues to be moved in the first direction in a deceleration manner following damping movement. In step S104, in response to a fact that a moving speed is not reduced to zero, and the page boundary is reached when the page is moved in the first direction, the change form of the at least one graph adjacent to the boundary in the page is displayed, where the change form of the graph is different from the initial form.

When the finger of the user leaves the touch display 200, the page displayed by the mobile terminal 100 on the touch display 200 is not immediately stopped, but continues to be moved in an inertial manner, and decelerates in a damping movement manner (a moving speed is progressively decreased), until the page is stopped. When the moving speed is not reduced to zero, if the mobile terminal 100 detects that the page boundary of the page is reached, the change form of the at least one graph adjacent to the boundary in the page starts to be displayed.

In some embodiments, when detecting that the boundary of the page is reached, the mobile terminal 100 determines, according to a moving speed and inertial acceleration of the page used when the boundary is reached, duration and a change rate of a tweened animation of the change form of the at least one graph adjacent to the boundary, and after the tweened animation of the change form is presented in the duration, restores and displays the initial form of the at least one graph adjacent to the boundary.

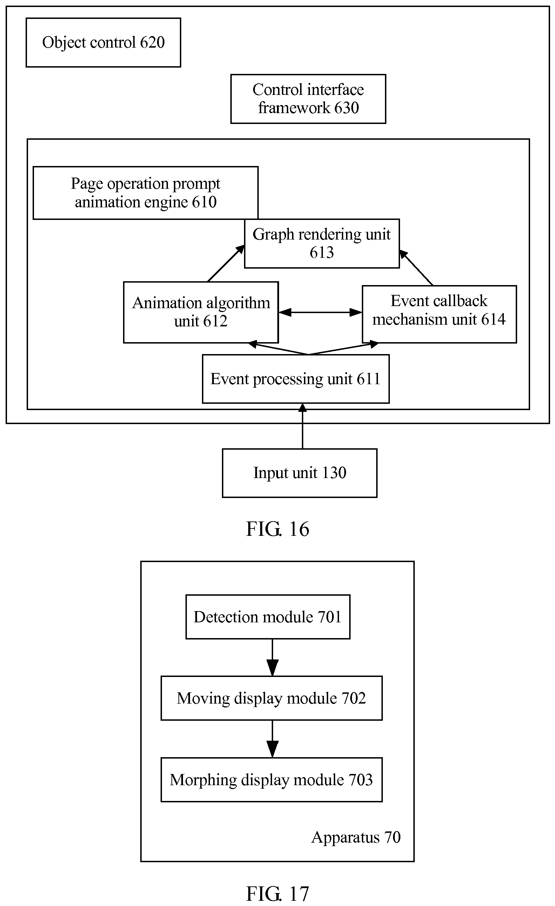

FIG. 16 is a schematic diagram of a module that can be configured to run in a mobile terminal according to some embodiments. The module includes an input unit 130, a page operation prompt engine 610, an object control 620, and a control interface framework 630.

In some embodiments, the input unit 130 is an input device for human-computer interaction, and obtains input of an operation action of the user. For content of the input unit 130, refer to a description in the embodiment shown in FIG. 1. Details are not described again, and are incorporated herein by reference.

The page operation prompt engine 610 includes an event processing unit 611, an animation algorithm unit 612, a graph rendering unit 613, and an event callback mechanism unit 614. The event processing unit 611 converts, into sliding displacement information (including a displacement distance, a rate, a direction, and the like), an event of the operation action obtained by the input unit 130, and performs filtering and smoothing processing. Therefore, sliding is fluent, and is identically displayed in different operating systems, so that user experience is good. The animation algorithm unit 612 receives the sliding displacement information that includes sliding displacement, the rate, the direction, and height information of a page item, and performs piece-wise calculation on a page, to achieve an effect of continuous and smooth movement that is similar to movement of a real physical page. The animation algorithm unit 612 calculates location information of the page according to the sliding displacement information, and calculates, according to the morphing algorithm, zoom information of a graph in the page displayed on a display apparatus. The graph rendering unit 613 performs graph effect depiction according to the location information of the page and the zoom information of the graph, that is, a rendering algorithm, generates depicting data, and then adapts the depicting data to the specific display apparatus by invoking the control interface framework, to display the depicting data on the display apparatus. The graph rendering unit 613 is a relatively independent parallel processing unit for processing a graph signal, and performs depiction by using an independent thread, to avoid affecting performance of a native function of an operating system, and reduce power consumption. The event callback mechanism unit 614 is configured to: obtain information that is fed back by a processor 180 and that is about rendering and algorithm processing; implement coordination between an animation and a gesture; determine, according to the location information of the page and the sliding displacement information, whether a page boundary is reached when the page is moved; and determine the morphing algorithm and the rendering algorithm, to generate a correct change form.

The object control 620 may be any control supporting page sliding, and an algorithm of the object control is automatically adapted. A page object abstracted according to the algorithm is a set with graphs. A current status of the page is obtained from the page when the page scrolls to the boundary. A time or animation morphing data related to a hand progress is output according to the displacement information from the event processing unit 611, and is adapted to specific hardware by using the graph rendering unit 613, to operate a display system.

The control interface framework 630 includes a series of interfaces configured to interact with the user and a series of interfaces configured to invoke the page operation prompt animation engine for refreshing.

In an implementation process, the event processing unit 611 converts all of time data, sensor data, and a detected touch operation into progress values that are from 0 to 1 and that represent the sliding displacement information, and then delivers the progress values to the processor 180. The event callback mechanism unit 614 obtains the information that is fed back by the processor 180 and that is about rendering and algorithm processing, delivers the information to the graph animation algorithm unit 612 to perform animation calculation, and delivers the information to the rendering unit 613 to re-depict the graph. The control interface framework 630 displays data of a re-depicted graph and the data is transmitted to the object control 620. The object control 620 displays page sliding and a change form of the graph.

In a scenario provided in some embodiments, when the user slides the page, the input unit 130 determines input of a sliding event (which may be sliding on a touch display, or shaking of a palm of the user that is detected by using gesture recognition, to switch a view to a next page). The event processing unit 611 obtains a displacement information queue, calculates, from a start point, a distance of displacement performed by the user, and then, determines, by using the event callback mechanism unit 614, whether the page boundary has been reached.

Then, the animation algorithm unit 612 calculates the zoom information of the graph (item) in the current page. An example of a formula is as follows:
When itemIndex<Threadshold, Scale(i) = itemIndex × scaleFactor × itemHeightFactor.
itemIndex represents a location sequence number obtained after ranking from a corresponding page boundary of a current graph. For example, when a page is slid downwards and a top boundary of the page is reached, a sequence number at the top is 0, and in a downward direction, sequence numbers are 1, 2, 3.... When a page is slid upwards and a bottom boundary of the page is reached, a sequence number at the bottom is 0, and in an upward direction, sequence numbers are 1, 2, 3....

ScaleFactor represents a zoom ratio. baseFactor represents a zoom ratio (usually set to 1) of an initial form of the graph. N is a zoom ratio difference in terms of adjacent sequence numbers. ScaleFactor = baseFactor - itemIndex × N. An animation effect can be adjusted by adjusting a fixed start zoom ratio and each reduction ratio.
itemHeightFactor represents a parameter related to a height of the graph, may represent discontinuity caused when the height of the graph is not considered, and may be a value that is in direct proportion to the height. A fixed ratio is specifically set according to a required ultimate effect.

Threadshold represents an end rank obtained after ranking a specific graph from the page boundary. This is optimization for effect performance. For example, if Threadshold is set to 3, only a graph starting from the page boundary to a third graph (or graphs at a third row, or graphs at a third row) need to be zoomed, to achieve a visual effect of overall physical rollback.

The algorithm result Scale(i) is obtained by creating an independent thread in a graph rendering system, to perform graph effect depiction. The algorithm may be in a form of the following pseudocode:

```
           Thread{
           lock(surface)
           canvas.setscale(i)
           release(surface)
           } start
```

The event may be further entered in a time manner, or entered in a sensor data manner. In the time data manner, the event is regularly executed. In the sensor data manner, the event is executed when a sensor senses data and the sensor data meets a time condition.

FIG. 17 is a schematic structural diagram of an apparatus 70 according to some embodiments. The apparatus 70 includes a detection module 701, a moving display module 702, and a morphing display module 703.

The apparatus may be disposed in a mobile terminal with a display apparatus, and the apparatus may be hardware, software, or an apparatus combining hardware and software.

In some embodiments, in response to a page boundary being reached when the page is moved in the first direction, and the operation action is still detected, the apparatus 70 displays a change form of a first graph. Specifically, the detection module 701 detects the operation action of a user. In response to the operation action being detected, the moving display module 702 movably displays the page on the display apparatus in the first direction, where the page includes one or more graphs, and the one or more graphs are displayed on the display apparatus in initial forms of the graphs. In response to the page boundary being reached when the page is moved in the first direction, and the operation action is still detected, the morphing display module 703 displays the change form of the first graph, where the first graph is a graph that is in the one or more graphs displayed on the display apparatus and that is adjacent to the page boundary, and the change form of the first graph is different from an initial form of the first graph.

In some embodiments, the morphing display module 703 includes a first display subunit. In response to detecting that the operation action is continuously performed, the first display subunit displays a change form that is of the first graph and that dynamically changes, and a larger action range of the operation action within a preset range leads to a larger form change from the initial form of the first graph to the change form of the first graph. In addition, in response to detecting that the action range of the operation action exceeds the preset range, the first display subunit displays a static change form of the first graph.

In some embodiments, the morphing display module 703 includes a second display subunit. In response to detecting that the operation action is continuously performed, the second display subunit displays a change form that is of the first graph and that dynamically changes, and a larger action range of the operation action leads to a larger form change from the initial form of the first graph to the change form of the first graph.

In some embodiments, the apparatus 70 further includes a restoration display module. The restoration display module displays a tweened animation of gradually restoring the first graph from the change form of the first graph to the initial form of the first graph, until the initial form of the first graph is displayed.

In some embodiments, the apparatus 70 further includes: an area display module, configured to: in response to the page boundary being reached when the page is moved in the first direction, and the operation action is still detected, continue to move the page, and display an area beyond the page boundary, where the area is different from the page; and in response to a fact that the operation input is no longer detected, move the page in a second direction opposite to the first direction, until the area is no longer displayed.

In some embodiments, in response to a page boundary being reached when the page is moved in the first direction, and the operation action is still detected, the apparatus 70 displays change forms of at least two graphs that are adjacent to the page boundary, and the change forms include a change form of a first graph and a change form of a second graph.

Specifically, the detection module 701 detects the operation action of a user. In response to the operation action being detected, the moving display module 702 movably displays the page on the display apparatus in the first direction, where the page includes one or more graphs, and the one or more graphs are displayed on the display apparatus in initial forms of the graphs. In response to the page boundary being reached when the page is moved in the first direction, and the operation action is still detected, the morphing display module 703 displays the change form of the first graph and the change form of the second graph, where the first graph and the second graph are graphs that are in the one or more graphs displayed on the display apparatus and that are adjacent to the page boundary, the change form of the first graph is different from an initial form of the first graph, and the change form of the second graph is different from an initial form of the second graph.

In some embodiments, the morphing display apparatus 703 displays the change form of the first graph and the change form of the second graph, where a difference between the displayed change form of the second graph and the initial form of the second graph is greater than a difference between the displayed change form of the first graph and the initial form of the first graph.

In some embodiments, in response to the operation action being no longer detected, the apparatus 70 continues to move the page in the first direction in a deceleration manner following damping movement. In addition, in response to detecting that a moving speed of the page is not reduced to zero, and the page boundary is reached when the page is moved in the first direction, the apparatus 70 displays a change form of a first graph.

Specifically, the detection module 701 detects the operation action of a user. In response to the operation action being detected, the moving display module 702 movably displays the page on the display apparatus in the first direction, where the page includes one or more graphs, and the one or more graphs are displayed on the display apparatus in initial forms of the graphs. In response to the fact that the operation action is no longer detected, the moving display module 702 continues to move the page in the first direction in the deceleration manner following damping movement. In response to the fact that it is detected that the moving speed of the page is not reduced to zero, and the page boundary is reached when the page is moved in the first direction, the morphing display module 703 displays the change form of the first graph, where the first graph is a graph that is in the one or more graphs displayed on the display apparatus and that is adjacent to the page boundary, and the change form of the first graph is different from an initial form of the first graph.

In some embodiments, the apparatus 70 further includes: an area display module, configured to: in response to detecting that the page boundary is reached when the page is moved in the first direction, continue to move the page in a deceleration manner, and display an area beyond the page boundary, where the area is different from the page; a resiling display module, configured to: in response to detecting that the moving speed of the page is reduced to zero, move the page in a second direction opposite to the first direction, until the area is no longer displayed; and a restoration display module, configured to display the initial form of the first graph when the area is no longer displayed.

For content performed by the detection module 701, the moving display module 702, the morphing display module 703, and all display subunits included in the modules in the embodiments, refer to the method in the foregoing embodiments and content described in FIG. 1 to FIG. 16, and details are not described again.

In conclusion, the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A method for displaying a page on a mobile terminal with a display apparatus, wherein the method comprises:
detecting an operation action of a user;
in response to the operation action being detected, movably displaying a page on the display apparatus in a first direction, wherein the page comprises one or more graphs, and the one or more graphs are displayed on the display apparatus in initial forms of the graphs; and
in response to a page boundary being reached when the page is moved in the first direction, and the operation action is still detected, displaying a change form of a first graph, wherein the first graph is a graph that is in the one or more graphs displayed on the display apparatus and that is adjacent to the page boundary, and the change form of the first graph is different from an initial form of the first graph.

2. The method according to claim 1, wherein the step of displaying a change form of the first graph comprises:
in response to detecting that the operation action is continuously performed, displaying a change form that is of the first graph and that dynamically changes, wherein a larger action range of the operation action within a preset range leads to a larger form change from the initial form of the first graph to the change form of the first graph; and
in response to detecting that the action range of the operation action exceeds the preset range, displaying a static change form of the first graph.

3. The method according to claim 1, wherein the step of displaying a change form of the first graph comprises:
in response to detecting that the operation action is continuously performed, displaying a change form that is of the first graph and that dynamically changes, wherein a larger action range of the operation action leads to a larger form change from the initial form of the first graph to the change form of the first graph.

4. The method according to any one of claims 1 to 3, wherein after the step of displaying a change form of the first graph, the method further comprises:
in response to the operation action being no longer detected, displaying the initial form of the first graph.

5. The method according to claim 4, wherein the step of displaying the initial form of the first graph further comprises:
displaying a tweened animation of gradually restoring the first graph from the change form of the first graph to the initial form of the first graph, until the initial form of the first graph is displayed.

6. The method according to any one of claims 1 to 5, wherein the method further comprises:
in response to the page boundary being reached when the page is moved in the first direction, and the operation action is still detected, continuing to move the page, and displaying an area beyond the page boundary, wherein the area is different from the page; and
in response to the operation input being no longer detected, moving the page in a second direction opposite to the first direction, until the area is no longer displayed.

7. The method according to any one of claims 1 to 6, wherein the graphs are:
characters, item lists, digital images, or icons.

8. The method according to any one of claims 1 to 7, wherein change forms of the graphs comprise forms obtained after any one or any combination of the following changes is performed on the initial forms:
a shape change, a size change, a transparency change, or a color change.

9. The method according to any one of claims 1 to 8, wherein the mobile terminal has a touch display, and the step of detecting an operation action of a user comprises:
detecting a touch action performed by the user on the touch display.

10. The method according to any one of claims 1 to 8, wherein the step of detecting an operation action of a user comprises at least one of the following:
detecting a voice instruction of the user;
detecting a gesture action of the user; or
detecting a body action of the user.

11. The method according to any one of claims 1 to 10, wherein the method further comprises:
in response to detecting that the page boundary is reached when the page is moved in the first direction, and the operation action is still detected, playing an alert sound.

12. The method according to any one of claims 1 to 11, wherein the first direction is:
a horizontal direction, a vertical direction, or an oblique direction on the display apparatus.

13. A method for displaying a page on a mobile terminal with a display apparatus, wherein the method comprises:
detecting an operation action of a user;
in response to the operation action being detected, movably displaying a page on the display apparatus in a first direction, wherein the page comprises one or more graphs, and the one or more graphs are displayed on the display apparatus in initial forms of the graphs; and
in response to a page boundary being reached when the page is moved in the first direction, and the operation action is still detected, displaying a change form of a first graph and a change form of a second graph, wherein the first graph and the second graph are graphs that are in the one or more graphs displayed on the display apparatus and that are adjacent to the page boundary, the change form of the first graph is different from an initial form of the first graph, and the change form of the second graph is different from an initial form of the second graph.

14. The method according to claim 13, wherein a distance between the first graph and the page boundary is less than a distance between the second graph and the page boundary, and the step of displaying a change form of the first graph and a change form of a second graph comprises:
displaying the change form of the first graph and the change form of the second graph, wherein a difference between the displayed change form of the second graph and the initial form of the second graph is greater than a difference between the displayed change form of the first graph and the initial form of the first graph.

15. A method implemented on a mobile terminal with a display apparatus, wherein the method comprises:
detecting an operation action of a user;
in response to the operation action being detected, movably displaying a page on the display apparatus in a first direction, wherein the page comprises one or more graphs, and the one or more graphs are displayed on the display apparatus in initial forms of the graphs;
in response to the operation action being no longer detected, continuing to move the page in the first direction in a deceleration manner following damping movement; and
in response to detecting that a moving speed of the page is not reduced to zero, and a page boundary is reached when the page is moved in the first direction, displaying a change form of a first graph, wherein the first graph is a graph that is in the one or more graphs displayed on the display apparatus and that is adjacent to the page boundary, and the change form of the first graph is different from an initial form of the first graph.

16. The method according to claim 15, wherein the method further comprises:
in response to detecting that the page boundary is reached when the page is moved in the first direction, continuing to move the page in a deceleration manner, and displaying an area beyond the page boundary, wherein the area is different from the page;
in response to detecting that the moving speed of the page is reduced to zero, moving the page in a second direction opposite to the first direction, until the area is no longer displayed; and
displaying the initial form of the first graph when the area is no longer displayed.

17. A mobile terminal, comprising:
a display apparatus;
one or more processors; and
a memory, wherein
the memory is configured to store a computer program; and
the processor is configured to run the computer program to perform the following procedure:
detecting an operation action of a user;
in response to the operation action being detected, movably displaying a page on the display apparatus in a first direction, wherein the page comprises one or more graphs, and the one or more graphs are displayed in initial forms; and
in response to a fact that a page boundary is reached when the page is moved in the first direction, and the operation action is still detected, displaying a change form of at least one of the plurality of graphs that is adjacent to the boundary, wherein the change form of the graph is different from the initial forms.

18. The mobile terminal according to claim 17, wherein the step of displaying a change form of the first graph comprises:
in response to detecting that the operation action is continuously performed, displaying a change form that is of the first graph and that dynamically changes, wherein a larger action range of the operation action within a preset range leads to a larger form change from the initial form of the first graph to the change form of the first graph; and
in response to detecting that the action range of the operation action exceeds the preset range, displaying a static change form of the first graph.

19. The mobile terminal according to claim 17, wherein the step of displaying a change form of the first graph comprises:
in response to detecting that the operation action is continuously performed, displaying a change form that is of the first graph and that dynamically changes, wherein a larger action range of the operation action leads to a larger form change from the initial form of the first graph to the change form of the first graph.

20. The mobile terminal according to any one of claims 17 to 19, wherein after the step of displaying a change form of the first graph, the processor further performs the following procedure:
in response to the operation action being no longer detected, displaying the initial form of the first graph.

21. The mobile terminal according to claim 20, wherein the step of displaying the initial form of the first graph further comprises:
displaying a tweened animation of gradually restoring the first graph from the change form of the first graph to the initial form of the first graph, until the initial form of the first graph is displayed.

22. The mobile terminal according to any one of claims 17 to 21, wherein the processor further performs the following procedure:
in response to the page boundary being reached when the page is moved in the first direction, and the operation action is still detected, continuing to move the page, and displaying an area beyond the page boundary, wherein the area is different from the page; and
after the operation input is no longer detected, moving the page in a second direction opposite to the first direction, until the area is no longer displayed.

23. A mobile terminal, wherein the mobile terminal comprises:
a display apparatus;
one or more processors; and
a memory, wherein
the memory is configured to store a computer program; and
the processor is configured to run the computer program to perform the following procedure:
detecting an operation action of a user;
in response to the operation action being detected, movably displaying a page on the display apparatus in a first direction, wherein the page comprises one or more graphs, and the one or more graphs are displayed on the display apparatus in initial forms of the graphs; and
in response to a page boundary being reached when the page is moved in the first direction, and the operation action is still detected, displaying a change form of a first graph and a change form of a second graph, wherein the first graph and the second graph are graphs that are in the one or more graphs displayed on the display apparatus and that are adjacent to the page boundary, the change form of the first graph is different from an initial form of the first graph, and the change form of the second graph is different from an initial form of the second graph.

24. The terminal apparatus according to claim 23, wherein a distance between the first graph and the page boundary is less than a distance between the second graph and the page boundary, and the step of displaying a change form of the first graph and a change form of a second graph comprises:
displaying the change form of the first graph and the change form of the second graph, wherein a difference between the displayed change form of the second graph and the initial form of the second graph is greater than a difference between the displayed change form of the first graph and the initial form of the first graph.

25. A terminal apparatus, wherein the terminal apparatus comprises:
a display apparatus;
one or more processors; and
a memory, wherein
the memory is configured to store a computer program; and
the processor is configured to run the computer program to perform the following procedure:
detecting an operation action of a user;
in response to the operation action being detected, movably displaying a page on the display apparatus in a first direction, wherein the page comprises one or more graphs, and the one or more graphs are displayed on the display apparatus in initial forms of the graphs;
in response to the operation action being no longer detected, continuing to move the page in the first direction in a deceleration manner following damping movement; and
in response to detecting that a moving speed of the page is not reduced to zero, and a page boundary is reached when the page is moved in the first direction, displaying a change form of a first graph, wherein the first graph is a graph that is in the one or more graphs displayed on the display apparatus and that is adjacent to the page boundary, and the change form of the first graph is different from an initial form of the first graph.

26. The mobile apparatus according to claim 25, wherein the mobile apparatus further performs the following procedure:
in response to detecting that the page boundary is reached when the page is moved in the first direction, continuing to move the page in a deceleration manner, and displaying an area beyond the page boundary, wherein the area is different from the page;
in response to detecting that the moving speed of the page is reduced to zero, moving the page in a second direction opposite to the first direction, until the area is no longer displayed; and
displaying the initial form of the first graph when the area is no longer displayed.

27. An apparatus for displaying a page on a mobile terminal with a display apparatus, wherein the apparatus comprises:
a detection module, configured to detect an operation action of a user;
a moving display module, configured to: in response to the operation action being detected, movably display a page on the display apparatus in a first direction, wherein the page comprises one or more graphs, and the one or more graphs are displayed on the display apparatus in initial forms of the graphs; and
a morphing display module, configured to: in response to a page boundary being reached when the page is moved in the first direction, and the operation action is still detected, display a change form of a first graph, wherein the first graph is a graph that is in the one or more graphs displayed on the display apparatus and that is adjacent to the page boundary, and the change form of the first graph is different from an initial form of the first graph.

28. The apparatus according to claim 27, wherein the morphing display module comprises:
a first display subunit, configured to: in response to detecting that the operation action is continuously performed, display a change form that is of the first graph and that dynamically changes, wherein a larger action range of the operation action within a preset range leads to a larger form change from the initial form of the first graph to the change form of the first graph; and in response to detecting that the action range of the operation action exceeds the preset range, display a static change form of the first graph.

29. The apparatus according to claim 27, wherein the morphing display module comprises:
a second display subunit, configured to: in response to detecting that the operation action is continuously performed, display a change form that is of the first graph and that dynamically changes, wherein a larger action range of the operation action leads to a larger form change from the initial form of the first graph to the change form of the first graph.

30. The apparatus according to any one of claims 27 to 29, wherein the apparatus further comprises:
a restoration display module, configured to: after the change form of the first graph is displayed, in response to the operation action being no longer detected, display the initial form of the first graph.

31. The apparatus according to claim 30, wherein the restoration display module comprises:
a restoration display subunit, configured to display a tweened animation of gradually restoring the first graph from the change form of the first graph to the initial form of the first graph, until the initial form of the first graph is displayed.

32. The apparatus according to any one of claims 27 to 31, wherein the apparatus further comprises:
an area display module, configured to: in response to the page boundary being reached when the page is moved in the first direction, and the operation action is still detected, continue to move the page, and display an area beyond the page boundary, wherein the area is different from the page; and in response to the operation input being no longer detected, move the page in a second direction opposite to the first direction, until the area is no longer displayed.

33. An apparatus for displaying a page on a mobile terminal with a display apparatus, wherein the apparatus comprises:
a detection module, configured to detect an operation action of a user;
a moving display module, configured to: in response to the operation action being detected, movably display a page on the display apparatus in a first direction, wherein the page comprises one or more graphs, and the one or more graphs are displayed on the display apparatus in initial forms of the graphs; and
a morphing display module, configured to: in response to a page boundary being reached when the page is moved in the first direction, and the operation action is still detected, display a change form of a first graph and a change form of a second graph, wherein the first graph and the second graph are graphs that are in the one or more graphs displayed on the display apparatus and that are adjacent to the page boundary, the change form of the first graph is different from an initial form of the first graph, and the change form of the second graph is different from an initial form of the second graph.

34. The apparatus according to claim 33, wherein the morphing display apparatus is configured to:
display the change form of the first graph and the change form of the second graph, wherein a difference between the displayed change form of the second graph and the initial form of the second graph is greater than a difference between the displayed change form of the first graph and the initial form of the first graph.

35. An apparatus for displaying a page on a mobile terminal with a display apparatus, wherein the apparatus comprises:
a detection module, configured to detect an operation action of a user;
a moving display module, configured to: in response to the operation action being detected, movably display a page on the display apparatus in a first direction, wherein the page comprises one or more graphs, and the one or more graphs are displayed on the display apparatus in initial forms of the graphs; and in response to the operation action being no longer detected, continue to move the page in the first direction in a deceleration manner following damping movement; and
a morphing display module, configured to: in response to detecting that a moving speed of the page is not reduced to zero, and a page boundary is reached when the page is moved in the first direction, display a change form of a first graph, wherein the first graph is a graph that is in the one or more graphs displayed on the display apparatus and that is adjacent to the page boundary, and the change form of the first graph is different from an initial form of the first graph.

36. The apparatus according to claim 35, wherein the apparatus further comprises:
an area display module, configured to: in response to detecting that the page boundary is reached when the page is moved in the first direction, continue to move the page in a deceleration manner, and display an area beyond the page boundary, wherein the area is different from the page;
a resiling display module, configured to: in response to detecting that the moving speed of the page is reduced to zero, move the page in a second direction opposite to the first direction, until the area is no longer displayed; and
a restoration display module, configured to display the initial form of the first graph when the area is no longer displayed.

37. A graphical user interface on a mobile terminal with a display apparatus, wherein the graphical user interface comprises:
a part of a page displayed on the display apparatus, wherein the page comprises one or more graphs, wherein
in response to a fact that an operation action of a user is detected, the page is moved in a first direction, wherein the one or more graphs are displayed in initial forms; and
in response to a page boundary being reached when the page is moved in the first direction, and the operation action is still detected, a change form of a first graph is displayed, wherein the first graph is a graph that is in the one or more graphs displayed on the display apparatus and that is adjacent to the page boundary, and the change form of the first graph is different from an initial form of the first graph.
